# EUROPEAN PATENT APPLICATION

(11) **EP 4 145 921 A1**
(43) Date of publication of application: **08.03.2023**
(21) Application number: 21796048.3
(22) Date of filing: 26.04.2021
(51) Int. Cl.: H04W 64/00

(54) **POSITIONING METHOD, APPARATUS AND DEVICE**

(30) Priority: 30.04.2020 CN 202010367152
(71) Applicant: Vivo Mobile Communication Co., Ltd., Dongguan, Guangdong 523863 (CN)
(72) Inventor: WANG, Yuanyuan, Dongguan, Guangdong 523863 (CN); SI, Ye, Dongguan, Guangdong 523863 (CN); SUN, Peng, Dongguan, Guangdong 523863 (CN); WU, Huaming, Dongguan, Guangdong 523863 (CN)
(74) Representative: Chas. Hude A/S
(86) International application number: PCT/CN2021/089841
(87) International publication number: WO 2021/218898

(57) **Abstract**

Embodiments of this application disclose a positioning method, a positioning apparatus, and a device. The method includes: sending target configuration information to a target device, where the target device is a network device or UE, and the target configuration information is used to configure at least one of the following for the network device or the LTE: a first target signal to be sent and related information for sending the first target signal, where the first target signal is used to determine a location of the UE.

## Description

### CROSS-REFERENCE TO RELATED APPLICATIONS

This application claims priority to Chinese Patent Application No. 202010367152.0, filed in China on April 30, 2020, which is incorporated herein by reference in its entirety.

### TECHNICAL FIELD

Embodiments of this application relate to the field of communications technologies, and in particular, to a positioning method, a positioning apparatus, and a device.

### BACKGROUND

Currently, a location of user equipment (user equipment, UE) can be determined by measuring a reference signal. Specifically, a network device can send positioning reference signals (positioning reference signal, PRS) to the UE, so that the UE can measure a time difference of reception of the positioning reference signals PRSs from a plurality of cells (for example, a serving cell and a neighboring cell) and report the time difference to the network device, so that the network device can determine the location of the UE based on the time difference. Alternatively, the UE can send uplink reference signals to a plurality of cells (for example, a serving cell and a neighboring cell), so that each cell measures corresponding time information and reports the time information to a location management function (location management function, LMF) device, thereby determining the location of the UE.

However, an occasion (for example, a sending period) for sending a PRS by the network device or an occasion for sending a periodic sounding reference signal (sounding reference signal, SRS) by the LTE is fixed. In some specific cases (for example, in the case of an emergency call), no reference signal can be sent in time, that is, the PRS or the SRS can be sent only after a specific sending period, such that the UE cannot report a measurement result in time, and the location of the UE cannot be determined in time.

### SUMMARY

Embodiments of this application provide a positioning method, a positioning apparatus, and a device to resolve a problem that a location of LTE cannot be determined in time in the related art.

To resolve the foregoing technical problem, the following technical solutions are used in the embodiments of this application:

According to a first aspect, an embodiment of this application provides a positioning method applied to a location management function device. The positioning method includes: sending target configuration information to a target device, where the target device is a network device or UE, and the target configuration information is used to configure at least one of the following for the network device or the UE: a first target signal to be sent and related information for sending the first target signal, where the first target signal is used to determine a location of the UE.

According to a second aspect, an embodiment of this application provides a positioning method applied to a network device. The positioning method includes: receiving target configuration information sent by a location management function device, where the target configuration information is used to configure at least one of the following for the network device or UE: a first target signal to be sent and related information for sending the first target signal, where the first target signal is used to determine a location of the UE.

According to a third aspect, an embodiment of this application provides a positioning method applied to UE. The positioning method includes: receiving target configuration information sent by a first device, where the first device is a location management function device or a network device, and the target configuration information is used to configure at least one of the following for the UE: a first target signal to be sent by the UE and related information for sending the first target signal by the UE; or receiving a first target signal sent by a network device, where the first target signal is used to determine a location of the UE.

According to a fourth aspect, an embodiment of this application provides a positioning apparatus. The positioning apparatus may include a sending module. The sending module is configured to send target configuration information to a target device, where the target device is a network device or UE, and the target configuration information is used to configure at least one of the following for the network device or the UE: a first target signal to be sent and related information for sending the first target signal, where the first target signal is used to determine a location of the UE.

According to a fifth aspect, an embodiment of this application provides a positioning apparatus. The positioning apparatus may include a receiving module. The receiving module is configured to receive target configuration information sent by a location management function device, where the target configuration information is used to configure at least one of the following for the positioning apparatus or LTE: a first target signal to be sent and related information for sending the first target signal, where the first target signal is used to determine a location of the UE.

According to a sixth aspect, an embodiment of this application provides a positioning apparatus. The positioning apparatus may include a receiving module. The receiving module is configured to receive target configuration information sent by a first device, where the first device is a location management function device or a network device, and the target configuration information is used to configure at least one of the following for the positioning apparatus: a first target signal to be sent by the positioning apparatus and related information for sending the first target signal by the positioning apparatus; or receive a first target signal sent by a network device, where the first target signal is used to determine a location of the positioning apparatus.

According to a seventh aspect, an embodiment of this application provides a location management function device. The location management function device includes a processor, a memory, and a program or instructions stored in the memory and capable of running on the processor. When the program or instructions are executed by the processor, the steps of the positioning method according to the first aspect are implemented.

According to an eighth aspect, an embodiment of this application provides a network device. The network device includes a processor, a memory, and a program or instructions stored in the memory and capable of running on the processor. When the program or instructions are executed by the processor, the steps of the positioning method according to the second aspect are implemented.

According to a ninth aspect, an embodiment of this application provides UE. The UE includes a processor, a memory, and a program or instructions stored in the memory and capable of running on the processor. When the program or instructions are executed by the processor, the steps of the positioning method according to the third aspect are implemented.

According to a tenth aspect, an embodiment of this application provides a communications system. The communications system includes the positioning apparatus according to the fourth aspect, the positioning apparatus according to the fifth aspect, and the positioning apparatus according to the sixth aspect; or the communications system includes the location management function device according to the seventh aspect, the network device according to the eighth aspect, and the UE according to the ninth aspect.

According to an eleventh aspect, an embodiment of this application provides a readable storage medium. The readable storage medium stores a program or instructions, and when the program or instructions are executed by a processor, the steps of the positioning method according to the first aspect are implemented, or the steps of the positioning method according to the second aspect are implemented, or the steps of the positioning method according to the third aspect are implemented.

According to a twelfth aspect, an embodiment of this application provides a chip. The chip includes a processor and a communications interface, the communications interface is coupled to the processor, and the processor is configured to run a program or instructions to implement the positioning method according to the first aspect, or the positioning method according to the second aspect, or the positioning method according to the third aspect.

In the embodiments of this application, the location management function device may send the target configuration information to the target device to configure at least one of the following for the network device or the LTE: the first target signal to be sent and the related information for sending the first target signal, thereby determining the location of the LTE by using the first target signal. Because the location management function device can configure the first target signal or the related information for sending the first target signal for the network device or the UE, the network device or the UE can send the first target signal based on the configured information to implement positioning of the LTE. In other words, the location management function device can configure the target configuration information for the network device or the UE based on an actual requirement. Therefore, a problem that the LTE cannot determine the location of the LTE in time can be avoided, and efficiency of determining the location of the UE by the UE is improved.

### BRIEF DESCRIPTION OF DRAWINGS

FIG. 1 is a schematic architectural diagram of a communications system according to an embodiment of this application;
FIG. 2 is a first schematic diagram of a positioning method according to an embodiment of this application;
FIG. 3 is a second schematic diagram of a positioning method according to an embodiment of this application;
FIG. 4 is a third schematic diagram of a positioning method according to an embodiment of this application;
FIG. 5 is a fourth schematic diagram of a positioning method according to an embodiment of this application;
FIG. 6 is a fifth schematic diagram of a positioning method according to an embodiment of this application;
FIG. 7 is a sixth schematic diagram of a positioning method according to an embodiment of this application;
FIG. 8 is a first schematic structural diagram of a positioning apparatus according to an embodiment of this application;
FIG. 9 is a second schematic structural diagram of a positioning apparatus according to an embodiment of this application;
FIG. 10 is a third schematic structural diagram of a positioning apparatus according to an embodiment of this application;
FIG. 11 is a fourth schematic structural diagram of a positioning apparatus according to an embodiment of this application;
FIG. 12 is a fifth schematic structural diagram of a positioning apparatus according to an embodiment of this application;
FIG. 13 is a sixth schematic structural diagram of a positioning apparatus according to an embodiment of this application;
FIG. 14 is a schematic hardware diagram of a location management function device according to an embodiment of this application;
FIG. 15 is a schematic hardware diagram of a network device according to an embodiment of this application; and
FIG. 16 is a schematic hardware diagram of UE according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application without creative efforts shall fall within the protection scope of this application.

The terms "first", "second", and the like in this specification and claims of this application are used to distinguish between similar objects instead of describing a specific order or sequence. It should be understood that the numbers used in this way are interchangeable in appropriate circumstances, so that the embodiments of this application can be implemented in other orders than the order illustrated or described herein. In addition, the term "and/or" in the specification and claims indicates at least one of connected objects, and the character "/" generally represents an "or" relationship between associated objects.

The embodiments of this application provide a positioning method, a positioning apparatus, and a device. Because a location management function device can configure a first target signal or related information for sending a first target signal for a network device or UE, the network device or the UE can send the first target signal based on the configured information to implement positioning of the LTE. In other words, the location management function device can configure target configuration information for the network device or the UE based on an actual requirement. Therefore, a problem that the UE cannot determine a location of the UE in time can be avoided, and efficiency of determining the location of the UE by the UE is improved.

The positioning method, positioning apparatus, and device provided in the embodiments of this application may be applied to a communications system, and may be specifically applied to a process of determining the location of the UE based on the communications system by configuring the signal for positioning or the related information for sending the signal for the network device or the UE.

The embodiments of this application may be applied to various communications systems, for example, a 5G communications system, a future evolved system, or another communications system. A plurality of application scenarios, for example, machine-to-machine (M2M), D2M, enhanced mobile broadband (enhanced mobile broadband, eMBB), and ultra-reliable and low latency communications (ultra-reliable and low latency communications, uRLLC), may be included. This may be specifically determined based on an actual use requirement, and is not limited in the embodiments of this application.

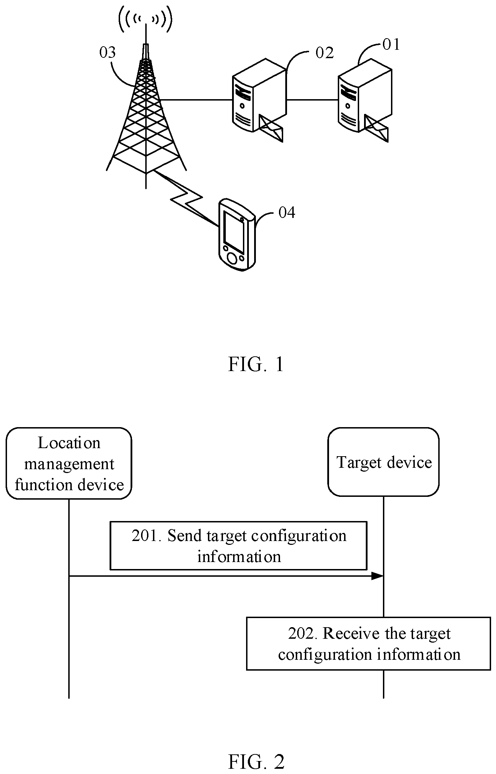

For example, FIG. 1 is a schematic architectural diagram of a communications system according to an embodiment of this application. As shown in FIG. 1, the communications system may include a location service client 01, a location management function device 02, a network device 03, and UE 04.

A connection and communication may be established between the location service client 01 and the location management function device 02. A connection and communication may be established between the location management function device 02 and the network device 03. A connection and communication may be established between the network device 03 and the UE 04.

Optionally, in this embodiment of this application, a connection and communication may be established between the location management function device 02 and the UE 04.

A location service (location service, LCS), which may also be known as a mobile location service, is a new type of mobile data value-added service that uses a positioning technology to determine a location of LTE and provides various application services based on obtained location data. In other words, by adding software and hardware to an existing network, location information of the UE is obtained by using radio signals transmitted by a network device and various UEs in the network, and the network provides related information and services for the UE.

The LMF device may be a network element in a core network device, or may be a device or module on a network device side (base station side). The LMF device can perform overall scheduling and coordination of resources required for positioning of the LTE that registers with or accesses the network device, and can also calculate or verify a final location, speed, and accuracy.

The network device may be a base transceiver station (base transceiver station, BTS) in a global system for mobile communication (global system for mobile communication, GSM) or a code division multiple access (code division multiple access, CDMA) network, or may be an NB (NodeB) in a wideband code division multiple access (wideband code division multiple access, WCDMA) network, or may be a base station, where the base station is an apparatus deployed in a radio access network (radio access network, RAN) and configured to provide a wireless communication function for the UE. The base station may include a transmission and reception point (transmission and reception point, TRP), a macro base station, a micro base station, a relay station, an access point, and the like in various forms. In systems using different radio access technologies, devices having base station functions may have different names, for example, a base station (NodeB) in a third generation mobile communications (3G) network, an evolved NodeB (evolved NodeB, eNB or eNodeB) in a long term evolution (long term evolution, LTE) system, and a gNB in a fifth generation mobile communications (5G) network. With evolution of the communications technologies, the name "base station" may change. The network device may alternatively be a radio controller in a cloud radio access network (cloud radio access network, CRAN) scenario.

The UE is a device that provides a user with voice and/or data connectivity, a handheld device with a wired/wireless connection function, or another processing device connected to a wireless modem. The UE may communicate with one or more core network devices by using the RAN. The UE may be a mobile terminal such as a mobile phone (or referred to as "cellular" phone) and a computer having a mobile terminal, such as a portable, pocket-sized, handheld, computer built-in, or in-vehicle mobile apparatus, which exchanges voice and/or data with the RAN; or may be a device such as a personal communication service (personal communication service, PCS) phone, a cordless phone, a session initiation protocol (session initiation protocol, SIP) phone, a wireless local loop (wireless local loop, WLL) station, or a personal digital assistant (personal digital assistant, PDA). The UE may also be referred to as a user agent (User Agent), a UE terminal device, an access terminal device, a wireless communications device, a terminal device unit, a terminal device station, a mobile station (Mobile Station), a mobile (Mobile), a remote station (Remote Station), a remote station, a remote terminal device (Remote Terminal), a subscriber unit (Subscriber Unit), a subscriber station (Subscriber Station), a terminal device apparatus, or the like. As an example, in this embodiment of this application, the UE is shown as a mobile phone in FIG. 1.

A positioning method, a device, and a system provided in the embodiments of this application are hereinafter described in detail by using specific embodiments and application scenarios thereof with reference to the accompanying drawings.

Based on the communications system shown in FIG. 1, an embodiment of this application provides a positioning method. As shown in FIG. 2, the positioning method may include the following step 201 and step 202.

Step 201: A location management function device sends target configuration information to a target device.

In this embodiment of this application, the target device is a network device or UE, and the target configuration information is used to configure at least one of the following for the network device or the UE: a first target signal to be sent and related information for sending the first target signal, where the first target signal is used to determine a location of the UE.

It should be noted that, in one case, the location management function device may send the target configuration information to the network device to configure the target configuration information for the network device or the LTE. The location management function device configures the target configuration information for the UE through the network device, that is, after receiving the target configuration information sent by the location management function device, the network device may send the target configuration information to the UE. In this case, in one manner, the target configuration information is used to configure at least one of the following for the network device: the first target signal to be sent by the network device and the related information for sending the first target signal by the network device. In another manner, the target configuration information is used to configure at least one of the following for the LTE: the first target signal to be sent by the LTE and the related information for sending the first target signal by the UE.

In another case, the location management function device may send the target configuration information to the UE to configure the target configuration information for the LTE. In this case, the target configuration information is used to configure at least one of the following for the UE: the first target signal to be sent by the UE and the related information for sending the first target signal by the UE.

Optionally, in this embodiment of this application, the target configuration information may include at least one of the following: first indication information, first resource information, first period-related information, second indication information, and third indication information.

The first indication information is used to indicate that the target device starts or stops sending the first target signal, the first resource information is used to indicate a frequency domain resource for sending a second target signal by the target device, the first period-related information is used to indicate a period for sending a third target signal by the target device, the second indication information is used to indicate corresponding TRP-related information for sending a fourth target signal by the network device, and the third indication information is used to indicate resource usage of the first target signal. All of the second target signal, the third target signal, and the fourth target signal include the first target signal.

It should be noted that the second target signal, the third target signal, and the fourth target signal may be the same or different. The first target signal may be the same as the second target signal, or may be a part of the second target signal; or the first target signal may be the same as the third target signal, or may be a part of the third target signal; or the first target signal may be the same as the fourth target signal, or may be a part of the fourth target signal.

Optionally, in an embodiment, the second target signal may be interpreted as a signal in which resource information of the first target signal is characterized as satisfying the first resource information or configured as the first resource information.

Optionally, in an embodiment, the second target signal may be interpreted as a signal in which period-related information of the first target signal is characterized as satisfying the first period-related information or configured as the first period-related information.

Optionally, in an embodiment, the second target signal may be interpreted as a signal in which second indication information of the first target signal is characterized as satisfying the second indication information or configured as the second indication information.

Optionally, in an embodiment, the second target signal may be interpreted as a signal in which third indication information of the first target signal is characterized as satisfying the third indication information or configured as the third indication information.

Optionally, in this embodiment of this application, the target signal (for example, the first target signal, the second target signal, the third target signal, or the fourth target signal) may be a signal for positioning (which may be referred to as a positioning signal). The positioning signal may be a reference signal for positioning, and the positioning signal includes at least one of the following: a downlink (downlink, DL) PRS, a channel state information-reference signal (channel-state information reference signal, CSI-RS), a synchronization signal block (synchronization signal and PBCH block, SSB), a tracking reference signal (tracking reference signal, TRS), an SRS, and the like.

Optionally, in this embodiment of this application, the first resource information (used to reduce a latency caused by a UE handover) may include at least one of the following: frequency layer information, carrier (carrier) information, bandwidth part (bandwidth part, BWP) information, a start resource position in a physical resource block (physical resource block, PRB), and a bandwidth in the PRB.

Optionally, in this embodiment of this application, the frequency layer information may include at least one of the following: a first frequency layer identifier and a first frequency layer quantity, where the first frequency layer identifier is an identifier of a frequency layer at which a signal is to be sent, and the first frequency layer quantity is a quantity of frequency layers at which signals are to be sent.

Optionally, in this embodiment of this application, the first period-related information (a period configuration that adapts to a requirement) may include at least one of the following: a period value set, a muting parameter set, a repetition factor set, a first set, and a second set.

The first set includes at least one period value in the period value set and at least one muting parameter in the muting parameter set; and the second set includes at least one period value in the period value set and at least one repetition factor in the repetition factor set, or the second set includes at least one period value in the period value set, at least one muting parameter in the muting parameter set, and at least one repetition factor in the repetition factor set.

It should be noted that the period value set may include one or more period values; the muting parameter set may include one or more muting parameters; and the repetition factor set may include one or more repetition factors.

In addition, the period value is a period value for sending the first target signal by the target device, the muting parameter is a muting parameter for sending the first target signal by the target device, and the repetition factor is a repetition factor for sending the first target signal by the target device.

For example, it is assumed that the period value set includes a period value 1, a period value 2, and a period value 3, and that the muting parameter set includes mutting 1, mutting 2, and mutting 3. The location management function device may configure the period 1 or the mutting 1, or the location management function device may configure a combination of the period 1 and the mutting 1 (that is, the first set, where the first set includes the period 1 and the mutting 1). Because a short period and appropriate mutting are configured, the period for sending the signal can be more appropriate.

For another example, it is assumed that the period value set includes a period value 1, a period value 2, and a period value 3, and that the muting parameter set includes mutting 1, mutting 2, and mutting 3, and that the repetition factor (repetition factor) set includes a repetition factor 1, a repetition factor 2, and a repetition factor 3. The location management function device may configure the period 2, the mutting 2, or the repetition factor 1, or the location management function device may configure a combination of the period 2, the mutting 2, and the repetition factor 1 (that is, the second set, where the second set includes the period 2, the mutting 2, and the repetition factor 1). Because a moderate period, appropriate mutting, and an appropriate repetition factor are configured, the period for sending the signal can be more appropriate.

Optionally, in this embodiment of this application, the TRP-related information (used to reduce resource consumption and avoid interference) may include at least one of the following: a target identifier corresponding to a TRP and a TRP-related quantity. The target identifier may include at least one of the following: a first TRP identifier, a first signal set identifier, and a first signal identifier. The TRP-related quantity may include at least one of the following: a first TRP quantity, a first signal set quantity, a first signal quantity, and a first target quantity.

The first TRP identifier is an identifier of a TRP that sends signals in at least one TRP corresponding to the network device, the first signal set identifier is an identifier of a signal set (set) to be sent in the TRP, and the first signal identifier is an identifier of a signal to be sent in the signal set. The first TRP quantity is a quantity of TRPs that send signals in the at least one TRP, the first signal set quantity is a quantity of signal sets to be sent by each TRP in the at least one TRP, the first signal quantity is a quantity of signals in each signal set, and the first target quantity is a quantity of symbols occupied by each signal.

Optionally, in this embodiment of this application, the third indication information may include at least one of the following: a slot offset (slot offset), a symbol offset (symbol offset), a frequency domain offset (reoffset), and a comb size (comb size).

It should be noted that the slot offset and/or the symbol offset are/is configured to avoid interference or aggregation in time domain, and that the frequency domain offset and/or the comb size are/is configured to avoid interference or aggregation in frequency domain.

Optionally, in this embodiment of this application, there is an association relationship between the target configuration information and first target information, and the association relationship is used by the target device to determine the first target signal, where the first target information is configuration information of a fifth target signal before the target configuration information is configured.

It should be noted that the first target information may be understood as the fifth target signal sent by the target device and/or related information for sending the fifth target signal by the target device before the target device receives the target configuration information.

Optionally, in this embodiment of this application, the first target information may include at least one of the following: second resource information and second period-related information.

Optionally, in this embodiment of this application, the second resource information may include at least one of the following: frequency layer (frequency layer) information, carrier (carrier) information, bandwidth part (bandwidth part, BWP) information, a start resource position in a physical resource block (physical resource block, PRB), and a bandwidth in the PRB.

Optionally, in this embodiment of this application, the carrier information may include at least one of the following: a carrier center frequency, a subcarrier spacing, and the like.

Optionally, in this embodiment of this application, the BWP information may include at least one of the following: a quantity of BWPs, a start frequency of a BWP, a BWP bandwidth, and the like.

Optionally, in this embodiment of this application, the second period-related information may include at least one of the following: a period, a muting parameter, and a repetition factor.

Optionally, in this embodiment of this application, the period may include at least one of the following: a period value and a period offset. The muting parameter may include at least one of the following: a mutting pattern (mutting pattern) 1, a mutting pattern 2, and a mutting bit repetition factor. The repetition factor may include at least one of the following: a repetition factor and a time gap (time gap).

Optionally, in this embodiment of this application, that there is an association relationship between the target configuration information and first target information includes at least one of the following: there is an association relationship between the first resource information and second resource information in the first target information, and there is an association relationship between the first period-related information and second period-related information in the first target information.

Optionally, in this embodiment of this application, the first target signal is any one of the following:
the second target signal;
a signal included in both the second target signal and the fifth target signal;
the third target signal;
a signal included in both the third target signal and the fifth target signal;
a signal included in both the second target signal and the third target signal; and
a signal included in all of the second target signal, the third target signal, and the fifth target signal.

It should be noted that, that the first target signal is a signal included in both the second target signal and the fifth target signal may be understood as: an intersection part between the second target signal and the fifth target signal is the first target signal. Other cases of "signal included in both or all" are similar to this and are not described herein again.

Optionally, in this embodiment of this application, that there is an association relationship between the first resource information and second resource information in the first target information includes at least one of the following: there is an association relationship between the first frequency layer identifier in the first resource information and a second frequency layer identifier in the first target information, and there is an association relationship between the first frequency layer quantity in the first resource information and a second frequency layer quantity in the first target information.

It may be understood that, in this case, the target configuration information includes at least the first resource information, and the first resource information includes at least the first frequency layer identifier and/or the first frequency layer quantity, and the first target information includes at least the second frequency layer identifier and/or the second frequency layer quantity.

Optionally, in this embodiment of this application, the first target signal is any one of the following:
a signal to be sent at a frequency layer indicated by the first frequency layer identifier;
a signal to be sent at both the frequency layer indicated by the first frequency layer identifier and a frequency layer indicated by the second frequency layer identifier;
a signal to be sent at a frequency layer corresponding to the first frequency layer quantity;
a signal to be sent at both the frequency layer corresponding to the first frequency layer quantity and a frequency layer corresponding to the second frequency layer quantity;
a signal to be sent at both the frequency layer indicated by the first frequency layer identifier and the frequency layer corresponding to the first frequency layer quantity; and
a signal to be sent at all of the frequency layer indicated by the first frequency layer identifier, the frequency layer indicated by the second frequency layer identifier, the frequency layer corresponding to the first frequency layer quantity, and the frequency layer corresponding to the second frequency layer quantity.

It should be noted that, assuming that the frequency layer quantity is A1, frequency layers corresponding to the frequency layer quantity may be understood as: first A1 frequency layers in positioning assistance information or signals at first A1 frequency layers in a fifth signal.

Optionally, in this embodiment of this application, that there is an association relationship between the target configuration information and first target information includes at least one of the following: there is an association relationship between the first TRP identifier in the target configuration information and a second TRP identifier in the first target information, there is an association relationship between the first signal set identifier in the target configuration information and a second signal set identifier in the first target information, and there is an association relationship between the first signal identifier in the target configuration information and a second signal identifier in the first target information.

Optionally, in this embodiment of this application, the first target information includes at least one of the following: the second TRP identifier, the second signal set identifier, and the second signal identifier.

It may be understood that, in this case, the target configuration information includes at least the second indication information, and the second indication information is used to indicate at least one of the following: a first TRP identifier, a first signal set identifier, and a first signal identifier.

Optionally, in this embodiment of this application, the first target signal is any one of the following:
a signal to be sent by the TRP indicated by the first TRP identifier;
a signal to be sent by both the TRP indicated by the first TRP identifier and a TRP indicated by the second TRP identifier;
the signal set indicated by the first signal set identifier;
a signal set included in both the signal set indicated by the first signal set identifier and a signal set indicated by the second signal set identifier;
the signal indicated by the first signal identifier; and
a signal included in both the signal indicated by the first signal identifier and a signal indicated by the second signal identifier.

It should be noted that the first TRP identifier is at least one TRP identifier. Other identifiers are similar and are not described exhaustively.

Optionally, in this embodiment of this application, that there is an association relationship between the target configuration information and first target information includes at least one of the following: there is an association relationship between the first TRP quantity in the target configuration information and a second TRP quantity in the first target information, there is an association relationship between the first signal set quantity in the target configuration information and a second signal set quantity in the first target information, and there is an association relationship between the first signal quantity in the target configuration information and a second signal quantity in the first target information.

Optionally, in this embodiment of this application, the first target information includes at least one of the following: the second TRP quantity, the second signal set quantity, and the second signal quantity.

It may be understood that, in this case, the target configuration information includes at least the second indication information, and the second indication information is used to indicate at least one of the following: the first TRP quantity, the first signal set quantity, and the first signal quantity.

Optionally, in this embodiment of this application, the first target signal is any one of the following:
a signal to be sent by a TRP corresponding to the first TRP quantity;
a signal to be sent by both the TRP corresponding to the first TRP quantity and a TRP corresponding to the second TRP quantity;
a signal set corresponding to the first signal set quantity;
a signal set included in both the signal set corresponding to the first signal set quantity and a signal set corresponding to the second signal set quantity;
a signal corresponding to the first signal quantity; and
a signal included in both the signal corresponding to the first signal quantity and a signal corresponding to the second signal quantity.

It should be noted that, assuming that the first TRP quantity is B 1, TRPs corresponding to the first TRP quantity may be understood as: first B 1 TRPs in the positioning assistance information or signals on first B 1 TRPs in the fifth signal. Other quantities are similar and are not described exhaustively.

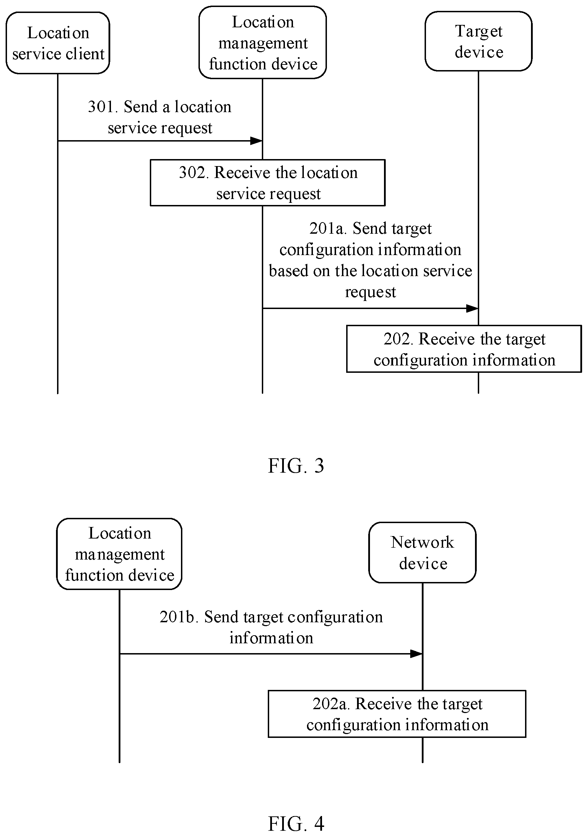

Optionally, in this embodiment of this application, with reference to FIG. 2, as shown in FIG. 3, before the foregoing step 201, the positioning method provided in this embodiment of this application further includes the following steps 301 and 302, and the foregoing step 201 may be specifically implemented by the following step 201a.

Step 301: A location service client sends a location service request to the location management function device.

In this embodiment of this application, the location service request is used to request a location of at least one UE, and the at least one UE includes the UE.

Optionally, in this embodiment of this application, the at least one UE is UE whose target latency is less than or equal to a first preset threshold, and the target latency is either of the following: a latency from a first event to a second event and a latency from a third event to a fourth event.

The first event is that the UE receives the location service request sent by the location management function device, the second event is that the location management function device receives a location response from the LTE with respect to the location service request, the third event is that the location management function device receives the location service request, and the fourth event is that the location management function device sends a location response from the location management function device with respect to the location service request.

Optionally, in this embodiment of this application, in a case that a second target quantity is less than or equal to a second preset threshold or that the target number of times is less than or equal to a third preset threshold, the target configuration information includes at least the first indication information, and the first indication information is used to indicate that the target device stops sending the first target signal.

The second target quantity is a quantity of UEs whose locations are requested by the location service client within first preset duration, and the target number of times is the number of times that the location service client sends the location service request within second preset duration.

Optionally, in this embodiment of this application, in a case that a second target quantity is greater than a second preset threshold or that the target number of times is greater than a third preset threshold, the target configuration information includes at least the first indication information, and the first indication information is used to indicate that the target device starts/begins sending the first target signal.

Step 302: The location management function device receives the location service request sent by the location service client.

Step 201a: The location management function device sends the target configuration information to the target device based on the location service request.

Step 202: The target device receives the target configuration information sent by the location management function device.

In this embodiment of this application, the target configuration information is dynamically configured by the location management function device or previous configuration information is updated, to adapt to a positioning requirement of the UE within a service area and dynamically configure the network device or the UE.

According to the positioning method provided in this embodiment of this application, the location management function device may send the target configuration information to the target device to configure at least one of the following for the network device or the UE: the first target signal to be sent and the related information for sending the first target signal, thereby determining the location of the UE by using the first target signal. Because the location management function device can configure the first target signal or the related information for sending the first target signal for the network device or the UE, the network device or the UE can send the first target signal based on the configured information to implement positioning of the LTE. In other words, the location management function device can configure the target configuration information for the network device or the UE based on an actual requirement. Therefore, a problem that the LTE cannot determine the location of the LTE in time can be avoided, and efficiency of determining the location of the UE by the UE is improved.

Optionally, in this embodiment of this application, with reference to FIG. 2, as shown in FIG. 4, the foregoing step 201 may be specifically implemented by the following step 201b, and the foregoing step 202 may be specifically implemented by the following step 202a.

Step 201b: The location management function device sends the target configuration information to the network device.

Step 202a: The network device receives the target configuration information sent by the location management function device.

Optionally, in this embodiment of this application, the location management function device may configure the target configuration information for the network device by using an LTE positioning protocol A (LTE Positioning protocol, LPPA) message, an NR positioning protocol A (NR Positioning protocol, NPPPA) message, or a protocol evolved therefrom.

Optionally, in this embodiment of this application, before the foregoing step 201b, the positioning method provided in this embodiment of this application further includes the following step 401 and step 402.

Step 401: The network device sends a target message to the location management function device.

In this embodiment of this application, the target message includes capability information of the network device, where the capability information is used to indicate whether the network device supports sending the first target signal based on the target configuration information.

Step 402: The location management function device receives the target message sent by the network device.

In this embodiment of this application, the location management function device may determine, based on the capability information of the network device, whether to send the target configuration information to the network device.

Optionally, in this embodiment of this application, before the foregoing step 201b, the positioning method provided in this embodiment of this application further includes the following step 501 to step 504.

Step 501: The location management function device sends a first request message to the network device.

In this embodiment of this application, the first request message is used to request the capability information of the network device, where the capability information is used to indicate whether the network device supports sending the first target signal based on the target configuration information.

Step 502: The network device receives the first request message sent by the location management function device.

Step 503: The network device sends a first response message to the location management function device.

In this embodiment of this application, the first response message includes the capability information.

Step 504: The location management function device receives the first response message sent by the network device.

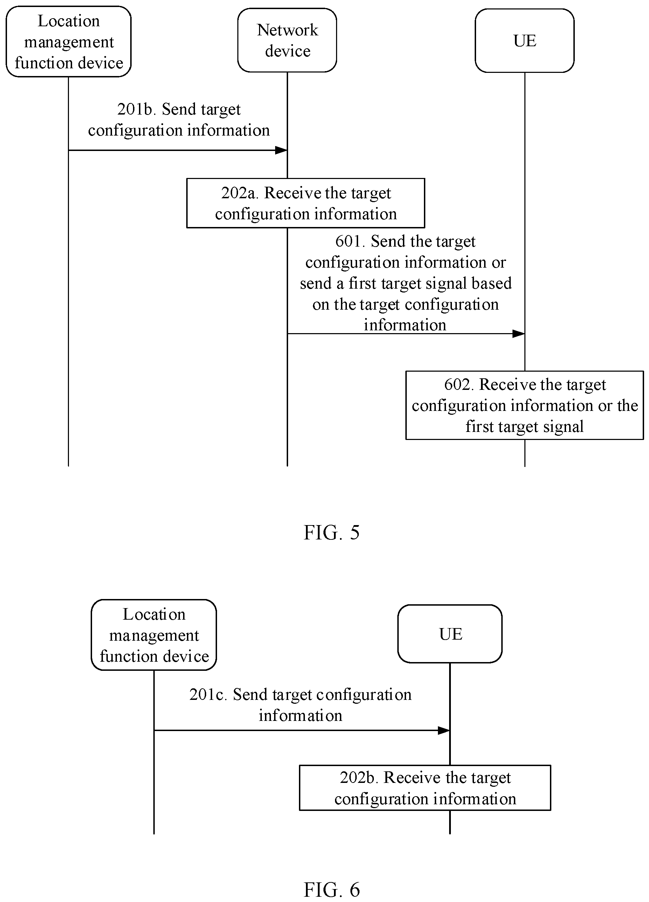

Optionally, in this embodiment of this application, with reference to FIG. 4, as shown in FIG. 5, after the foregoing step 202a, the positioning method provided in this embodiment of this application further includes the following step 601 and step 602.

Step 601: The network device sends the target configuration information to the LTE or sends the first target signal to the UE based on the target configuration information.

In this embodiment of this application, the target configuration information sent by the network device to the UE is used by the UE to send the first target signal.

Optionally, in this embodiment of this application, that the network device sends the target configuration information to the UE in the foregoing step 601 may be specifically implemented by the following step 601a or step 601b.

Step 601a: The network device broadcasts a system information block SIB message.

In this embodiment of this application, the SIB message includes the target configuration information.

Step 601b: The network device sends a radio resource control (radio resource control, RRC) message to the UE.

In this embodiment of this application, the RRC message includes the target configuration information.

Step 602: The UE receives the target configuration information or the first target signal sent by the network device.

Optionally, in this embodiment of this application, that the UE receives the target configuration information sent by the network device in the foregoing step 602 may be specifically implemented by the following 602a or step 602b.

Step 602a: The UE receives the system information block SIB message broadcast by the network device.

Step 602b: The UE receives the RRC message sent by the network device.

Optionally, in this embodiment of this application, with reference to FIG. 2, as shown in FIG. 6, the foregoing step 201 may be specifically implemented by the following step 201c, and the foregoing step 202 may be specifically implemented by the following step 202b.

Step 201c: The location management function device sends the target configuration information to the UE.

Step 202b: The UE receives the target configuration information sent by the location management function device.

Optionally, in this embodiment of this application, the location management function device may configure the target configuration information for the UE by using an LTE positioning protocol (LTE Positioning protocol, LPP) message, an NR positioning protocol (NR Positioning protocol, NPPP) message, or a protocol evolved therefrom.

Optionally, in this embodiment of this application, the target configuration information includes a target time (effective timing). The target time is a time when the target device activates the target configuration information, and the target time includes any one of the following: a universal time coordinated (universal time coordinated, UTC), a frame number, and a slot number; or the target time is an offset relative to a first time point, and the first time point is predefined or specified in a protocol.

It should be noted that, in a case that the target time is the offset relative to the first time point, after receiving the target configuration information, the target device can make the target configuration information effective starting from timing N+K, where timing N is timing carried in the target configuration information or timing of receiving the target configuration information, K is the offset relative to the first time point, and K is in units of slots.

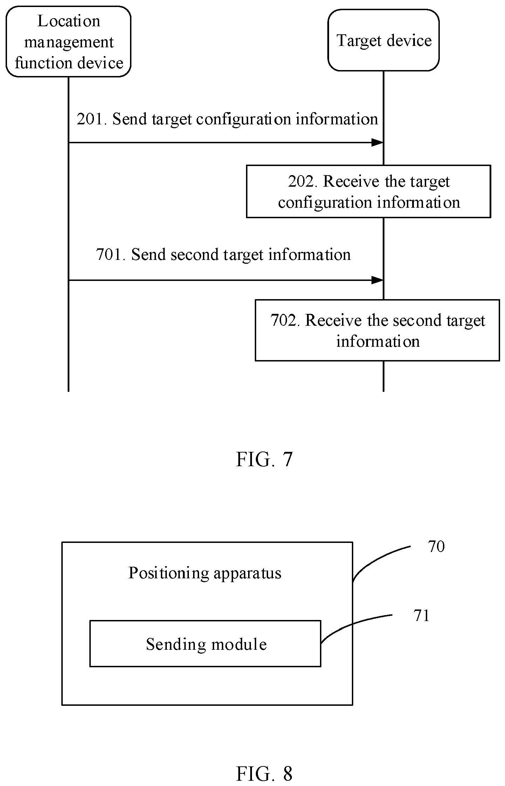

Optionally, in this embodiment of this application, with reference to FIG. 2, as shown in FIG. 7, after the foregoing step 202, the positioning method provided in this embodiment of this application further includes the following step 701 and step 702.

Step 701: The location management function device sends second target information to the target device.

In this embodiment of this application, the second target information is used to indicate that the target device activates a part or all of configuration information in the target configuration information.

Step 702: The target device receives the second target information sent by the location management function device.

In this embodiment of this application, the second target information corresponds to first target indication information, and the first target indication information is used to indicate that the network device activates a part or all of configuration information in the target configuration information.

In this embodiment of this application, the second target information corresponds to third target indication information, and the third target indication information is used to indicate that the LTE activates a part or all of configuration information in the target configuration information.

It should be noted that, in a case that the target device is the network device, after the foregoing step 702, the network device may send the third target indication information to the UE.

Optionally, in this embodiment of this application, the target configuration information includes N groups of configuration information.

The second target information is used to indicate that the target device activates M groups of configuration information in the N groups of configuration information, or the second target information is used to indicate that the network device activates L groups of configuration information in the N groups of configuration information, where the L groups of configuration information are configuration information that the network device is allowed to send to the UE, N, M, and L are all positive integers, M is less than or equal to N, and L is less than or equal to N.

Optionally, in this embodiment of this application, the target configuration information includes N groups of configuration information, and the first target indication information is used to indicate that the network device activates M groups of configuration information or L groups of configuration information in the N groups of configuration information, where the L groups of configuration information are configuration information that the network device is allowed to send to the UE, N, M, and L are all positive integers, M is less than or equal to N, and L is less than or equal to N.

Optionally, in this embodiment of this application, the second target information includes an identifier of each group of configuration information in the M groups of configuration information. Alternatively, the second target information includes an identifier of each group of configuration information in the L groups of configuration information.

Optionally, in this embodiment of this application, the second target indication information includes an identifier of each group of configuration information in P groups of configuration information. Alternatively, the second target indication information includes an identifier of each group of configuration information in R groups of configuration information.

Optionally, in this embodiment of this application, the target configuration information includes N groups of configuration information, where N is a positive integer. In a case that a first device is the location management function device, the third target indication information is used to indicate that the LTE activates M groups of configuration information in the N groups of configuration information; or in a case that a first device is the network device, the third target indication information is used to indicate that the LTE activates M groups of configuration information or L groups of configuration information in the N groups of configuration information, where the L groups of configuration information are configuration information that the network device is allowed to send to the UE, M and L are both positive integers, M is less than or equal to N, and L less than or equal to N.

Optionally, in this embodiment of this application, after the foregoing step 202a, the positioning method provided in this embodiment of this application further includes the following step 801.

Step 801: The network device activates Q groups of configuration information or L groups of configuration information.

In this embodiment of this application, the Q groups of configuration information are configuration information in the M groups of configuration information, and Q is a positive integer less than or equal to M.

Optionally, in this embodiment of this application, that the network device sends the target configuration information to the UE in the foregoing step 601 may be specifically implemented by the following step 601c, and that the UE receives the target configuration information sent by the network device in the foregoing step 602 may be specifically implemented by the following step 602c.

Step 601c: The network device sends the Q groups of configuration information or the L groups of configuration information to the UE.

Step 602c: The LTE receives the Q groups of configuration information or the L groups of configuration information sent by the network device.

Optionally, in this embodiment of this application, after the foregoing step 602c, the positioning method provided in this embodiment of this application further includes the following step 901 and step 902.

Step 901: The network device sends second target indication information to the UE.

In this embodiment of this application, the second target indication information is used to indicate that the LTE activates the P groups of configuration information in the Q groups of configuration information or the R groups of configuration information in the L groups of configuration information, where P is a positive integer less than or equal to Q, and R is a positive integer less than or equal to L.

Optionally, in this embodiment of this application, a manner of indicating that the LTE activates the P groups of configuration information or the R groups of configuration information by the second target indication information is any one of the following:
a manner of indicating activation by setting a target bit in a media access layer control element (media access control-control element, MAC CE);
a manner of indicating activation by configuring a group identifier in the MAC CE;
a manner of indicating activation by configuring a group identifier in downlink control information (downlink control information, DCI); and
a manner of indicating activation by setting a target bit in the DCI.

Step 902: The UE receives the second target indication information sent by the network device.

In this embodiment of this application, the second target indication information corresponds to fourth target indication information, and the fourth target indication information is used to indicate that the LTE activates the P groups of configuration information in the Q groups of configuration information or the R groups of configuration information in the L groups of configuration information.

Optionally, in this embodiment of this application, the fourth target indication information includes an identifier of each group of configuration information in the P groups of configuration information; or the fourth target indication information includes an identifier of each group of configuration information in the R groups of configuration information.

Optionally, in this embodiment of this application, a manner of indicating that the LTE activates the P groups of configuration information or the R groups of configuration information by the fourth target indication information is any one of the following:
a manner of indicating activation by setting a target bit in a MAC CE;
a manner of indicating activation by configuring a group identifier in the MAC CE;
a manner of indicating activation by configuring a group identifier in DCI; and
a manner of indicating activation by setting a target bit in the DCI.

Optionally, in this embodiment of this application, some configuration information in the target configuration information can be configured or activated by setting the target bit (bit) in the MAC CE.

Optionally, in this embodiment of this application, some configuration information in the target configuration information is configured or activated by setting a maximum quantity of enable bits to a constant or setting a quantity of enable bits to a constant (for example, 1, 8, or 16).

Optionally, in this embodiment of this application, some configuration information in the corresponding RRC can be activated by using the DCI.

Optionally, in this embodiment of this application, some configuration information enabled by MAC can be activated by using the DCI.

Optionally, in this embodiment of this application, before the foregoing step 201, the positioning method provided in this embodiment of this application further includes the following step 1001 to step 1005.

Step 1001: The location management function device sends a positioning information request to the target device.

In this embodiment of this application, the positioning information request is used to request the target device to send configuration information of the first target signal.

Step 1002: The target device receives the positioning information request sent by the location management function device.

Step 1003: The target device sends a positioning information response to the location management function device.

In this embodiment of this application, the positioning information response is used by the location management function device to determine whether to send the target configuration information to the network device.

Step 1004: The location management function device receives the positioning information response sent by the target device.

Step 1005: The location management function device determines, based on a location service request sent by a location service client and the positioning information response, whether to send the target configuration information to the target device.

Optionally, in this embodiment of this application, the positioning information request includes identifiers of the M groups of configuration information or identifiers of the L groups of configuration information.

Optionally, in this embodiment of this application, after the foregoing step 202, the positioning method provided in this embodiment of this application further includes the following step 1101 and step 1102.

Step 1101: The target device sends failure indication information to the location management function device.

In this embodiment of this application, the failure indication information is used to indicate that the target device cannot send the first target signal based on the target configuration information.

Optionally, in this embodiment of this application, the failure indication information includes failure cause information, and the failure cause information is used to indicate at least one of the following: a resource for sending the first target signal is insufficient, the target configuration information is not supported, and a service configuration of the first target signal is not supported.

Step 1102: The location management function device receives the failure indication information sent by the target device.

An embodiment of this application provides a positioning method applied to a location management function device. The positioning method may include the following step 10.

Step 10: A location management function device sends target configuration information to a target device.

In this embodiment of this application, the target device is a network device or UE, and the target configuration information is used to configure at least one of the following for the network device or the UE: a first target signal to be sent and related information for sending the first target signal, where the first target signal is used to determine a location of the UE.

Optionally, in this embodiment of this application, before the foregoing step 10, the positioning method provided in this embodiment of this application further includes step 11, and the foregoing step 10 may be specifically implemented by the following step 10a.

Step 11: The location management function device receives the location service request sent by the location service client.

Step 10a: The location management function device sends the target configuration information to the target device based on the location service request.

Optionally, in this embodiment of this application, before the foregoing step 10, the positioning method provided in this embodiment of this application further includes step 12 or step 13.

Step 12: The location management function device receives a target message sent by the network device.

Step 13: The location management function device sends a first request message to the network device and receives a first response message sent by the network device.

Optionally, in this embodiment of this application, after the foregoing step 10, the positioning method provided in this embodiment of this application further includes step 14.

Step 14: The location management function device receives failure indication information sent by the target device.

Optionally, in this embodiment of this application, after the foregoing step 10, the positioning method provided in this embodiment of this application further includes step 15.

Step 15: The location management function device sends second target information to the target device.

Optionally, in this embodiment of this application, before the foregoing step 10, the positioning method provided in this embodiment of this application further includes step 16 to step 18.

Step 16: The location management function device sends a positioning information request to the target device.

Step 17: The location management function device receives a positioning information response sent by the target device.

Step 18: The location management function device determines, based on a location service request sent by a location service client and the positioning information response, whether to send the target configuration information to the target device.

It should be noted that, for detailed descriptions about the foregoing steps 10 to 18, reference may be made to the descriptions in the foregoing embodiment. To avoid repetition, details are not described herein again.

According to the positioning method provided in this embodiment of this application, because the location management function device can configure the first target signal or the related information for sending the first target signal for the network device or the UE, the network device or the LTE can send the first target signal based on the configured information to implement positioning of the UE. In other words, the location management function device can configure the target configuration information for the network device or the UE based on an actual requirement. Therefore, a problem that the UE cannot determine the location of the UE in time can be avoided, and efficiency of determining the location of the UE by the UE is improved.

An embodiment of this application provides a positioning method applied to a network device. The positioning method may include the following step 20.

Step 20: A network device receives target configuration information sent by a location management function device.

In this embodiment of this application, the target configuration information is used to configure at least one of the following for the network device or LTE: a first target signal to be sent and related information for sending the first target signal, where the first target signal is used to determine a location of the UE.

Optionally, in this embodiment of this application, after the foregoing step 20, the positioning method provided in this embodiment of this application further includes step 21, step 22, or step 23.

Step 21: The network device sends the first target signal to the LTE based on the target configuration information.

Step 22: The network device sends the target configuration information to the UE, where the target configuration information is used by the UE to send the first target signal.

Step 23: The network device sends failure indication information to the location management function device, where the failure indication information is used to indicate that the network device cannot send the first target signal based on the target configuration information.

Optionally, in this embodiment of this application, the foregoing step 22 may be specifically implemented by the following step 22a or step 22b.

Step 22a: The network device broadcasts a system information block SIB message, where the SIB message includes the target configuration information.

Step 22b: The network device sends a radio resource control RRC message to the UE, where the RRC message includes the target configuration information.

Optionally, in this embodiment of this application, before the foregoing step 20, the positioning method provided in this embodiment of this application further includes step 24 or step 25.

Step 24: The network device sends a target message to the location management function device, where the target message includes capability information of the network device.

Step 25: The network device receives a first request message sent by the location management function device and sends a first response message to the location management function device.

Optionally, in this embodiment of this application, after the foregoing step 20, the positioning method provided in this embodiment of this application further includes step 26.

Step 26: The network device receives first target indication information sent by the location management function device.

Optionally, in this embodiment of this application, after the foregoing step 20, the positioning method provided in this embodiment of this application further includes step 27, and the foregoing step 22 may be specifically implemented by the following step 22c.

Step 27: The network device activates Q groups of configuration information or L groups of configuration information.

Step 22c: The network device sends the Q groups of configuration information or the L groups of configuration information to the UE.

Optionally, in this embodiment of this application, after the foregoing step 22c, the positioning method provided in this embodiment of this application further includes step 28.

Step 28: The network device sends second target indication information to the UE.

Optionally, in this embodiment of this application, before the foregoing step 20, the positioning method provided in this embodiment of this application further includes step 29 and step 30.

Step 29: The network device receives a positioning information request sent by the location management function device.

Step 30: The network device sends a positioning information response to the location management function device.

It should be noted that, for detailed descriptions about the foregoing steps 20 to 30, reference may be made to the descriptions in the foregoing embodiment. To avoid repetition, details are not described herein again.

According to the positioning method provided in this embodiment of this application, the network device can send the first target signal based on the first target signal or the related information for sending the first target signal that is configured by the location management function device, to implement positioning of the UE. In other words, the location management function device can configure the target configuration information for the network device based on an actual requirement. Therefore, a problem that the UE cannot determine the location of the UE in time can be avoided, and efficiency of determining the location of the UE by the UE is improved.

An embodiment of this application provides a positioning method applied to LTE. The positioning method may include the following step 31 or 32.

Step 31: UE receives target configuration information sent by a first device.

In this embodiment of this application, the first device is a location management function device or a network device, and the target configuration information is used to configure at least one of the following for the UE: a first target signal to be sent by the UE and related information for sending the first target signal by the UE.

Step 32: The UE receives a first target signal sent by the network device.

In this embodiment of this application, the first target signal is used to determine a location of the UE.

Optionally, in this embodiment of this application, the foregoing step 31 may be specifically implemented by the following step 31a or step 31b.

Step 31a: The UE receives a system information block SIB message broadcast by the network device, where the SIB message includes the target configuration information.

Step 31b: The UE receives a radio resource control RRC message sent by the network device, where the RRC message includes the target configuration information.

Optionally, in this embodiment of this application, after the foregoing step 31, the positioning method provided in this embodiment of this application further includes step 33.

Step 33: The UE receives third target indication information sent by the first device, where the third target indication information is used to indicate that the UE activates a part or all of configuration information in the target configuration information.

Optionally, in this embodiment of this application, after the foregoing step 31, the positioning method provided in this embodiment of this application further includes step 34.

Step 34: The LTE receives Q groups of configuration information or L groups of configuration information sent by the network device.

Optionally, in this embodiment of this application, after the foregoing step 34, the positioning method provided in this embodiment of this application further includes step 35.

Step 35: The UE receives fourth target indication information sent by the network device.

Optionally, in this embodiment of this application, before the foregoing step 31, the positioning method provided in this embodiment of this application further includes step 36 and step 37.

Step 36: The UE receives a positioning information request sent by the location management function device.

Step 37: The LTE sends a positioning information response to the location management function device.

It should be noted that, for detailed descriptions about the foregoing steps 31 to 37, reference may be made to the descriptions in the foregoing embodiment. To avoid repetition, details are not described herein again.

According to the positioning method provided in this embodiment of this application, because the location management function device can configure the first target signal or the related information for sending the first target signal for the UE, the UE can send the first target signal based on the configured information to implement positioning of the UE. In other words, the location management function device can configure the target configuration information for the LTE based on an actual requirement. Therefore, a problem that the UE cannot determine the location of the UE in time can be avoided, and efficiency of determining the location of the UE by the UE is improved.

It should be noted that a positioning method provided in an embodiment of this application may be performed by a positioning apparatus or a control module for performing the positioning method in the positioning apparatus.

FIG. 8 is a possible schematic structural diagram of a positioning apparatus in an embodiment of this application. As shown in FIG. 8, the positioning apparatus 70 may include a sending module 71.

The sending module 71 is configured to send target configuration information to a target device, where the target device is a network device or UE, and the target configuration information is used to configure at least one of the following for the network device or the LTE: a first target signal to be sent and related information for sending the first target signal. The first target signal is used to determine a location of the UE.

In a possible implementation, the target configuration information may include at least one of the following: first indication information, first resource information, first period-related information, second indication information, and third indication information. The first indication information is used to indicate that the target device starts or stops sending the first target signal, the first resource information is used to indicate a frequency domain resource for sending a second target signal by the target device, the first period-related information is used to indicate a period for sending a third target signal by the target device, the second indication information is used to indicate corresponding TRP-related information for sending a fourth target signal by the network device, and the third indication information is used to indicate resource usage of the first target signal. All of the second target signal, the third target signal, and the fourth target signal include the first target signal.

In a possible implementation, the first resource information includes at least one of the following: frequency layer information, carrier information, BWP information, a start resource position in a PRB, and a bandwidth in the PRB.

In a possible implementation, the frequency layer information includes at least one of the following: a first frequency layer identifier and a first frequency layer quantity, where the first frequency layer identifier is an identifier of a frequency layer at which a signal is to be sent, and the first frequency layer quantity is a quantity of frequency layers at which signals are to be sent.

In a possible implementation, the first period-related information includes at least one of the following: a period value set, a muting parameter set, a repetition factor set, a first set, and a second set. The first set includes at least one period value in the period value set and at least one muting parameter in the muting parameter set; and the second set includes at least one period value in the period value set and at least one repetition factor in the repetition factor set, or the second set includes at least one period value in the period value set, at least one muting parameter in the muting parameter set, and at least one repetition factor in the repetition factor set.

In a possible implementation, the TRP-related information includes at least one of the following: a target identifier corresponding to a TRP and a TRP-related quantity, the target identifier includes at least one of the following: a first TRP identifier, a first signal set identifier, and a first signal identifier, and the TRP-related quantity includes at least one of the following: a first TRP quantity, a first signal set quantity, a first signal quantity, and a first target quantity. The first TRP identifier is an identifier of a TRP that sends signals in at least one TRP corresponding to the network device, the first signal set identifier is an identifier of a signal set to be sent in the TRP, and the first signal identifier is an identifier of a signal to be sent in the signal set; and the first TRP quantity is a quantity of TRPs that send signals in the at least one TRP, the first signal set quantity is a quantity of signal sets to be sent by each TRP in the at least one TRP, the first signal quantity is a quantity of signals in each signal set, and the first target quantity is a quantity of symbols occupied by each signal.

In a possible implementation, the third indication information includes at least one of the following: a slot offset, a symbol offset, a frequency domain offset, and a comb size.

In a possible implementation, there is an association relationship between the target configuration information and first target information, and the association relationship is used by the target device to determine the first target signal. The first target information is configuration information of a fifth target signal before the target configuration information is configured.

In a possible implementation, that there is an association relationship between the target configuration information and first target information includes at least one of the following: there is an association relationship between the first resource information and second resource information in the first target information, and there is an association relationship between the first period-related information and second period-related information in the first target information.

In a possible implementation, the first target signal is any one of the following:
the second target signal;
a signal included in both the second target signal and the fifth target signal;
the third target signal;
a signal included in both the third target signal and the fifth target signal;
a signal included in both the second target signal and the third target signal; and
a signal included in all of the second target signal, the third target signal, and the fifth target signal.

In a possible implementation, that there is an association relationship between the first resource information and second resource information in the first target information includes at least one of the following: there is an association relationship between the first frequency layer identifier in the first resource information and a second frequency layer identifier in the second resource information, and there is an association relationship between the first frequency layer quantity in the first resource information and a second frequency layer quantity in the second resource information.

In a possible implementation, the first target signal is any one of the following:
a signal to be sent at a frequency layer indicated by the first frequency layer identifier;
a signal to be sent at both the frequency layer indicated by the first frequency layer identifier and a frequency layer indicated by the second frequency layer identifier;
a signal to be sent at a frequency layer corresponding to the first frequency layer quantity;
a signal to be sent at both the frequency layer corresponding to the first frequency layer quantity and a frequency layer corresponding to the second frequency layer quantity;
a signal to be sent at both the frequency layer indicated by the first frequency layer identifier and the frequency layer corresponding to the first frequency layer quantity; and
a signal to be sent at all of the frequency layer indicated by the first frequency layer identifier, the frequency layer indicated by the second frequency layer identifier, the frequency layer corresponding to the first frequency layer quantity, and the frequency layer corresponding to the second frequency layer quantity.

In a possible implementation, that there is an association relationship between the target configuration information and first target information includes at least one of the following: there is an association relationship between the first TRP identifier in the target configuration information and a second TRP identifier in the first target information, there is an association relationship between the first signal set identifier in the target configuration information and a second signal set identifier in the first target information, and there is an association relationship between the first signal identifier in the target configuration information and a second signal identifier in the first target information.

In a possible implementation, the first target signal is any one of the following:
a signal to be sent by the TRP indicated by the first TRP identifier;
a signal to be sent by both the TRP indicated by the first TRP identifier and a TRP indicated by the second TRP identifier;
the signal set indicated by the first signal set identifier;
a signal set included in both the signal set indicated by the first signal set identifier and a signal set indicated by the second signal set identifier;
the signal indicated by the first signal identifier; and
a signal included in both the signal indicated by the first signal identifier and a signal indicated by the second signal identifier.

In a possible implementation, that there is an association relationship between the target configuration information and first target information includes at least one of the following: there is an association relationship between the first TRP quantity in the target configuration information and a second TRP quantity in the first target information, there is an association relationship between the first signal set quantity in the target configuration information and a second signal set quantity in the first target information, and there is an association relationship between the first signal quantity in the target configuration information and a second signal quantity in the first target information.

In a possible implementation, the first target signal is any one of the following:
a signal to be sent by a TRP corresponding to the first TRP quantity;
a signal to be sent by both the TRP corresponding to the first TRP quantity and a TRP corresponding to the second TRP quantity;
a signal set corresponding to the first signal set quantity;
a signal set included in both the signal set corresponding to the first signal set quantity and a signal set corresponding to the second signal set quantity;
a signal corresponding to the first signal quantity; and
a signal included in both the signal corresponding to the first signal quantity and a signal corresponding to the second signal quantity.

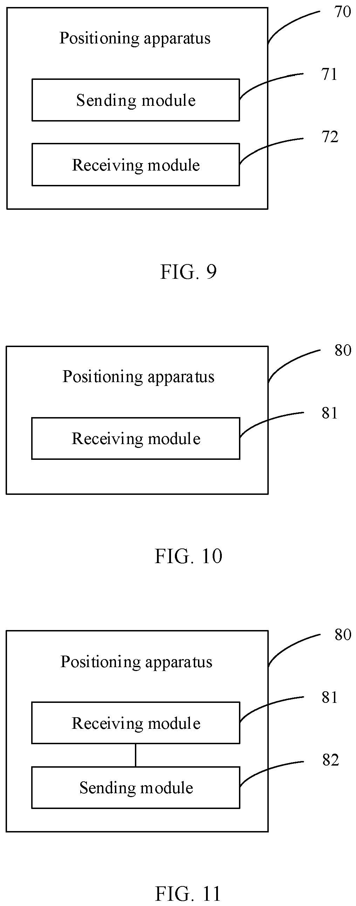

In a possible implementation, with reference to FIG. 8, as shown in FIG. 9, the positioning apparatus 70 provided in this embodiment of this application further includes a receiving module 72. Before the sending module 71 sends the target configuration information to the target device, the receiving module 72 is configured to receive a location service request sent by a location service client, where the location service request is used to request a location of at least one UE, and the at least one UE includes the UE. The sending module 71 is specifically configured to send the target configuration information to the target device based on the location service request received by the receiving module 72.

In a possible implementation, the at least one UE is UE whose target latency is less than or equal to a first preset threshold, and the target latency is either of the following: a latency from a first event to a second event and a latency from a third event to a fourth event. The first event is that the UE receives the location service request sent by a location management function device, the second event is that the location management function device receives a location response from the LTE with respect to the location service request, the third event is that the location management function device receives the location service request, and the fourth event is that the location management function device sends a location response from the location management function device with respect to the location service request.

In a possible implementation, in a case that a second target quantity is less than or equal to a second preset threshold or that the target number of times is less than or equal to a third preset threshold, the target configuration information includes at least the first indication information, and the first indication information is used to indicate that the target device stops sending the first target signal. Alternatively, in a case that a second target quantity is greater than a second preset threshold or that the target number of times is greater than a third preset threshold, the target configuration information includes at least the first indication information, and the first indication information is used to indicate that the target device starts sending the first target signal. The second target quantity is a quantity of UEs whose locations are requested by the location service client within first preset duration, and the target number of times is the number of times that the location service client sends the location service request within second preset duration.

In a possible implementation, the target configuration information includes a target time. The target time is a time when the target device activates the target configuration information, and the target time includes any one of the following: a UTC, a frame number, and a slot number; or the target time is an offset relative to a first time point, and the first time point is predefined or specified in a protocol.

In a possible implementation, with reference to FIG. 8, as shown in FIG. 9, the positioning apparatus 70 provided in this embodiment of this application further includes a receiving module 72. The receiving module 72 is configured to receive a target message sent by the network device, where the target message includes capability information of the network device. Alternatively, the sending module 71 is specifically configured to send a first request message to the network device; and the receiving module 72 is configured to receive a first response message sent by the network device, where the first request message is used to request capability information of the network device, and the first response message includes the capability information. The capability information is used to indicate whether the network device supports sending the first target signal based on the target configuration information.

In a possible implementation, with reference to FIG. 8, as shown in FIG. 9, the positioning apparatus 70 provided in this embodiment of this application further includes a receiving module 72. After the sending module 71 sends the target configuration information to the target device, the receiving module 72 is configured to receive failure indication information sent by the target device, where the failure indication information is used to indicate that the target device cannot send the first target signal based on the target configuration information.

In a possible implementation, the failure indication information includes failure cause information, and the failure cause information is used to indicate at least one of the following: a resource for sending the first target signal is insufficient, the target configuration information is not supported, and a service configuration of the first target signal is not supported.

In a possible implementation, after sending the target configuration information to the target device, the sending module 71 is further configured to send second target information to the target device, where the second target information is used to indicate that the target device activates a part or all of configuration information in the target configuration information.

In a possible implementation, the target configuration information includes N groups of configuration information. The second target information is used to indicate that the target device activates M groups of configuration information in the N groups of configuration information, or the second target information is used to indicate that the network device activates L groups of configuration information in the N groups of configuration information, where the L groups of configuration information are configuration information that the network device is allowed to send to the UE, N, M, and L are all positive integers, M is less than or equal to N, and L is less than or equal to N.

In a possible implementation, the second target information includes an identifier of each group of configuration information in the M groups of configuration information; or the second target information includes an identifier of each group of configuration information in the L groups of configuration information.

In a possible implementation, before sending the target configuration information to the target device, the sending module 71 is further configured to send a positioning information request to the target device, where the positioning information request is used to request the target device to send configuration information of the first target signal. The positioning apparatus 70 provided in this embodiment of this application further includes a receiving module and a determining module. The receiving module is configured to receive a positioning information response sent by the target device. The determining module is configured to determine, based on a location service request sent by a location service client and the positioning information response received by the receiving module, whether to send the target configuration information to the target device.

In a possible implementation, the positioning information request includes identifiers of the M groups of configuration information or identifiers of the L groups of configuration information.

The positioning apparatus provided in this embodiment of this application is capable of implementing the processes that are implemented by the location management function device in the foregoing method embodiments. To avoid repetition, details are not described herein again.

The positioning apparatus in this embodiment of this application may be an apparatus, or may be a component, an integrated circuit, or a chip in the location management function device.

The positioning apparatus provided in this embodiment of this application is capable of implementing the processes that are implemented by the location management function device in the foregoing method embodiments. To avoid repetition, details are not described herein again.

According to the positioning apparatus provided in this embodiment of this application, because the location management function device can configure the first target signal or the related information for sending the first target signal for the network device or the UE, the network device or the LTE can send the first target signal based on the configured information to implement positioning of the UE. In other words, the location management function device can configure the target configuration information for the network device or the UE based on an actual requirement. Therefore, a problem that the UE cannot determine the location of the UE in time can be avoided, and efficiency of determining the location of the UE by the UE is improved.

FIG. 10 is a possible schematic structural diagram of a positioning apparatus in an embodiment of this application. As shown in FIG. 10, the positioning apparatus 80 may include a receiving module 81.

The receiving module 81 is configured to receive target configuration information sent by a location management function device, where the target configuration information is used to configure at least one of the following for the positioning apparatus or LTE: a first target signal to be sent and related information for sending the first target signal. The first target signal is used to determine a location of the UE.

In a possible implementation, with reference to FIG. 10, as shown in FIG. 11, the positioning apparatus 80 provided in this embodiment of this application further includes a sending module 82. After the receiving module 81 receives the target configuration information sent by the location management function device, the sending module 82 is configured to send the first target signal to the UE based on the target configuration information; or send the target configuration information to the UE, where the target configuration information is used by the UE to send the first target signal; or send failure indication information to the location management function device, where the failure indication information is used to indicate that a network device cannot send the first target signal based on the target configuration information.

In a possible implementation, the sending module 82 is specifically configured to broadcast a SIB message, where the SIB message includes the target configuration information; or send an RRC message to the UE, where the RRC message includes the target configuration information.

In a possible implementation, with reference to FIG. 10, as shown in FIG. 11, the positioning apparatus 80 provided in this embodiment of this application further includes a sending module 82. The sending module 82 is configured to send a target message to the location management function device, where the target message includes capability information of the network device. Alternatively, the receiving module 81 is further configured to receive a first request message sent by the location management function device; and the sending module 82 is configured to send a first response message to the location management function device, where the first request message is used to request capability information of the network device, and the first response message includes the capability information. The capability information is used to indicate whether the network device supports sending the first target signal based on the target configuration information.

In a possible implementation, after receiving the target configuration information sent by the location management function device, the receiving module 81 is further configured to receive first target indication information sent by the location management function device, where the first target indication information is used to indicate that the network device activates a part or all of configuration information in the target configuration information.

In a possible implementation, the target configuration information includes N groups of configuration information, and the first target indication information is used to indicate that the network device activates M groups of configuration information or L groups of configuration information in the N groups of configuration information, where the L groups of configuration information are configuration information that the network device is allowed to send to the UE, N, M, and L are all positive integers, M is less than or equal to N, and L is less than or equal to N.

In a possible implementation, the positioning apparatus 80 provided in this embodiment of this application further includes an activation module. After the receiving module 81 receives the first target indication information sent by the location management function device, the activation module is configured to activate Q groups of configuration information or the L groups of configuration information, where the Q groups of configuration information are configuration information in the M groups of configuration information, and Q is a positive integer less than or equal to M. The sending module 82 is specifically configured to send the Q groups of configuration information or the L groups of configuration information to the UE.

In a possible implementation, after sending the Q groups of configuration information or the L groups of configuration information to the UE, the sending module 82 is further configured to send second target indication information to the UE, where the second target indication information is used to indicate that the UE activates P groups of configuration information in the Q groups of configuration information or R groups of configuration information in the L groups of configuration information, P is a positive integer less than or equal to Q, and R is a positive integer less than or equal to L.

In a possible implementation, the second target indication information includes an identifier of each group of configuration information in the P groups of configuration information; or the second target indication information includes an identifier of each group of configuration information in the R groups of configuration information.

In a possible implementation, a manner of indicating that the UE activates the P groups of configuration information or the R groups of configuration information by the second target indication information is any one of the following:
a manner of indicating activation by setting a target bit in a MAC CE;
a manner of indicating activation by configuring a group identifier in the MAC CE;
a manner of indicating activation by configuring a group identifier in DCI; and
a manner of indicating activation by setting a target bit in the DCI.

In a possible implementation, before receiving the target configuration information sent by the location management function device, the receiving module 81 is further configured to receive a positioning information request sent by the location management function device, where the positioning information request is used to request a network device to send configuration information of the first target signal. With reference to FIG. 10, as shown in FIG. 11, the positioning apparatus 80 provided in this embodiment of this application further includes a sending module 82. The sending module 82 is configured to send a positioning information response to the location management function device, where the positioning information response is used by the location management function device to determine whether to send the target configuration information to the network device.

The positioning apparatus provided in this embodiment of this application is capable of implementing the processes that are implemented by the network device in the foregoing method embodiments. To avoid repetition, details are not described herein again.

The positioning apparatus in this embodiment of this application may be an apparatus, or may be a component, an integrated circuit, or a chip in the network device.

The positioning apparatus provided in this embodiment of this application is capable of implementing the processes that are implemented by the network device in the foregoing method embodiments. To avoid repetition, details are not described herein again.

According to the positioning apparatus provided in this embodiment of this application, the network device can send the first target signal based on the first target signal or the related information for sending the first target signal that is configured by the location management function device, to implement positioning of the UE. In other words, the location management function device can configure the target configuration information for the network device based on an actual requirement. Therefore, a problem that the UE cannot determine the location of the UE in time can be avoided, and efficiency of determining the location of the UE by the UE is improved.

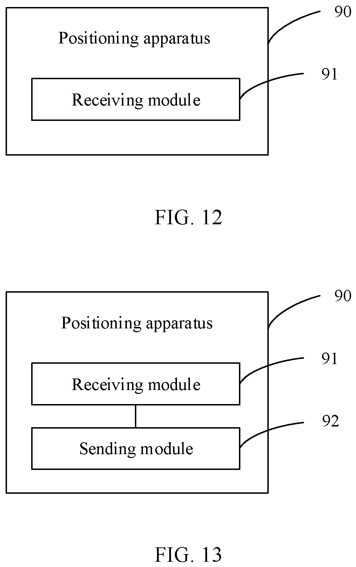

FIG. 12 is a possible schematic structural diagram of a positioning apparatus in an embodiment of this application. As shown in FIG. 12, the positioning apparatus 90 may include a receiving module 91.

The receiving module 91 is configured to receive target configuration information sent by a first device, where the first device is a location management function device or a network device, and the target configuration information is used to configure at least one of the following for the positioning apparatus: a first target signal to be sent by the positioning apparatus and related information for sending the first target signal by the positioning apparatus; or receive a first target signal sent by a network device. The first target signal is used to determine a location of the positioning apparatus.

In a possible implementation, the receiving module 91 is specifically configured to receive a SIB message broadcast by the network device, where the SIB message includes the target configuration information; or receive an RRC message sent by the network device, where the RRC message includes the target configuration information.

In a possible implementation, after receiving the target configuration information sent by the first device, the receiving module 91 is further configured to receive third target indication information sent by the first device, where the third target indication information is used to indicate that LTE activates a part or all of configuration information in the target configuration information.

In a possible implementation, the target configuration information includes N groups of configuration information, and N is a positive integer. In a case that the first device is the location management function device, the third target indication information is used to indicate that the LTE activates M groups of configuration information in the N groups of configuration information; or in a case that the first device is the network device, the third target indication information is used to indicate that the LTE activates M groups of configuration information or L groups of configuration information in the N groups of configuration information, where the L groups of configuration information are configuration information that the network device is allowed to send to the UE, M and L are both positive integers, M is less than or equal to N, and L is less than or equal to N.

In a possible implementation, after receiving the target configuration information sent by the first device, the receiving module 91 is further configured to receive Q groups of configuration information or the L groups of configuration information sent by the network device, where the Q groups of configuration information are configuration information activated by the network device in the M groups of configuration information, and Q is a positive integer less than or equal to M.

In a possible implementation, after receiving the Q groups of configuration information or the L groups of configuration information sent by the network device, the receiving module 91 is further configured to receive fourth target indication information sent by the network device, where the fourth target indication information is used to indicate that the UE activates P groups of configuration information in the Q groups of configuration information or R groups of configuration information in the L groups of configuration information, P is a positive integer less than or equal to Q, and R is a positive integer less than or equal to L.

In a possible implementation, the fourth target indication information includes an identifier of each group of configuration information in the P groups of configuration information; or the fourth target indication information includes an identifier of each group of configuration information in the R groups of configuration information.

In a possible implementation, a manner of indicating that the UE activates the P groups of configuration information or the R groups of configuration information by the fourth target indication information is any one of the following:
a manner of indicating activation by setting a target bit in a MAC CE;
a manner of indicating activation by configuring a group identifier in the MAC CE;
a manner of indicating activation by configuring a group identifier in DCI; and
a manner of indicating activation by setting a target bit in the DCI.

In a possible implementation, before receiving the target configuration information sent by the first device, the receiving module 91 is further configured to receive a positioning information request sent by the location management function device, where the positioning information request is used to request UE to send configuration information of the first target signal. With reference to FIG. 12, as shown in FIG. 13, the positioning apparatus 90 provided in this embodiment of this application further includes a sending module 92. The sending module 92 is configured to send a positioning information response to the location management function device, where the positioning information response is used by the location management function device to determine whether to send the target configuration information to the UE.

The positioning apparatus in this embodiment of this application may be an apparatus, or may be a component, an integrated circuit, or a chip in the UE. The apparatus may be a mobile electronic device, or may be a non-mobile electronic device. For example, the mobile electronic device may be a mobile phone, a tablet computer, a notebook computer, a palmtop computer, an in-vehicle electronic device, a wearable device, an ultra-mobile personal computer (ultra-mobile personal computer, UMPC), a netbook, a personal digital assistant (personal digital assistant, PDA), or the like. The non-mobile electronic device may be a server, a network attached storage (Network Attached Storage, NAS), a personal computer (personal computer, PC), a television (television, TV), a teller machine, a self-service machine, or the like. This is not specifically limited in this embodiment of this application.

The positioning apparatus in this embodiment of this application may be an apparatus having an operating system. The operating system may be an Android (Android) operating system, an iOS operating system, or other possible operating systems, and is not specifically limited in this embodiment of this application.

The positioning apparatus provided in this embodiment of this application is capable of implementing the processes that are implemented by the UE in the foregoing method embodiments. To avoid repetition, details are not described herein again.

According to the positioning apparatus provided in this embodiment of this application, because the location management function device can configure the first target signal or the related information for sending the first target signal for the UE, the UE can send the first target signal based on the configured information to implement positioning of the UE. In other words, the location management function device can configure the target configuration information for the LTE based on an actual requirement. Therefore, a problem that the UE cannot determine the location of the UE in time can be avoided, and efficiency of determining the location of the UE by the UE is improved.

Optionally, an embodiment of this application further provides a location management function device, including a processor 101, a memory 102, and a program or instructions stored in the memory 102 and capable of running on the processor 101. When the program or instructions are executed by the processor 101, the steps of the foregoing method embodiment are implemented, with the same technical effect achieved. To avoid repetition, details are not described herein again.

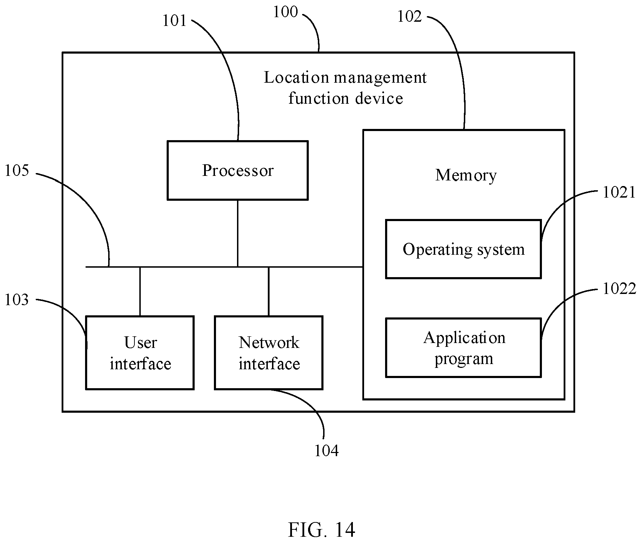

FIG. 14 is a schematic diagram of a hardware structure of a location management function device for implementing an embodiment of this application.

The location management function device 100 includes but is not limited to at least one processor 101, a memory 102, a user interface 103, and at least one network interface 104. The components in the location management function device 100 are coupled together by using a bus system 105.

It should be noted that a person skilled in the art can understand that the structure of the location management function device 100 shown in FIG. 14 does not constitute any limitation on the location management function device. The location management function device may include more or fewer components than those shown in FIG. 14, or some components are combined, or component arrangements are different.

In this embodiment of this application, the at least one network interface 104 is configured to send target configuration information to a target device, where the target device is a network device or UE, and the target configuration information is used to configure at least one of the following for the network device or the UE: a first target signal to be sent and related information for sending the first target signal, where the first target signal is used to determine a location of the UE.

In this embodiment of this application, because the location management function device can configure the first target signal or the related information for sending the first target signal for the network device or the UE, the network device or the UE can send the first target signal based on the configured information to implement positioning of the UE. In other words, the location management function device can configure the target configuration information for the network device or the UE based on an actual requirement. Therefore, a problem that the UE cannot determine the location of the LTE in time can be avoided, and efficiency of determining the location of the UE by the UE is improved.

It may be understood that the bus system 105 is configured to implement a connection and communication between these components. In addition to a data bus, the bus system 105 further includes a power bus, a control bus, and a status signal bus. However, for clarity of description, various buses are marked as the bus system 105 in FIG. 14.

The user interface 103 may include a display, a keyboard, a pointing device (for example, a mouse, a trackball, a touch panel, or a touchscreen), or the like.

It may be understood that the memory 102 in this embodiment of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), which is used as an external cache. For example but not for restrictive description, a plurality of forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synch link DRAM, SLDRAM), and a direct rambus random access memory (direct rambus RAM, DRRAM). The memory 102 described in this embodiment of this application is intended to include but is not limited to these and any other suitable types of memories.

In some embodiments, the memory 102 stores the following elements: executable modules or data structures, or a subset thereof, or an extended set thereof: an operating system 1021 and an application program 1022.

The operating system 1021 includes various system programs, such as a framework layer, a kernel library layer, and a driver layer, for implementing various basic services and processing hardware-based tasks. The application program 1022 includes various application programs, such as a media player and a browser, which are used to implement various application services. A program for implementing the method in the embodiment of this application may be included in the application program 1022.

In this embodiment of this application, the location management function device 100 may further include a program or instructions stored in the memory 102 and capable of running on the processor 101. When the program or instructions are executed by the processor 101, the steps of the method provided in the embodiment of this application are implemented.

The foregoing method disclosed by the embodiment of this application may be applied to the processor 101, or implemented by the processor 101. The processor 101 may be an integrated circuit chip that has a signal processing capability. In an implementation process, the steps of the foregoing method may be completed by hardware integrated logic circuits in the processor 101 or instructions in a form of software. The foregoing processor 101 may be a general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, or a discrete hardware component. The processor may implement or perform various methods, steps, and logical block diagrams that are disclosed in the embodiments of this application. The general-purpose processor may be a microprocessor, or the processor may be any conventional processor or the like. The steps of the methods disclosed with reference to the embodiments of this application may be directly performed and completed by using a hardware decoding processor, or may be performed and completed by using a combination of hardware and a software module in a decoding processor. The software module may be located in a computer-readable storage medium that is mature in the art, such as a random access memory, a flash memory, a read-only memory, a programmable read-only memory or electrically erasable programmable memory, or a register. The computer-readable storage medium is located in the memory 102. The processor 101 reads information in the memory 102, and completes the steps of the foregoing method in combination with its hardware. Specifically, the computer-readable storage medium stores a program or instructions. When the program or instructions are executed by the processor 101, the steps of the method embodiment provided in the embodiments of this application are implemented.

It may be understood that the embodiments described in the embodiments of this application may be implemented by hardware, software, firmware, middleware, microcode, or a combination thereof. For hardware implementation, the processing unit may be implemented in one or more ASICs, DSPs, digital signal processing devices (DSP device, DSPD), programmable logic devices (programmable logic device, PLD), FPGAs, general-purpose processors, controllers, microcontrollers, or microprocessors, or other electronic units for performing the functions described in this application or a combination thereof.

For software implementation, the technologies described in the embodiments of this application may be implemented by modules (for example, processes or functions) that perform the functions described in the embodiments of this application. Software code may be stored in the memory and executed by the processor. The memory may be implemented in or outside the processor.

An embodiment of this application further provides a readable storage medium. The readable storage medium stores a program or instructions. When the program or instructions are executed by the processor 101 shown in FIG. 14, each process of the foregoing method embodiment is implemented, with the same technical effect achieved. To avoid repetition, details are not described herein again. The computer-readable storage medium is, for example, a ROM, a RAM, a magnetic disk, or an optical disc.

Optionally, an embodiment of this application further provides a network device, including a processor 111, a memory 112, and a program or instructions stored in the memory 112 and capable of running on the processor 111. When the program or instructions are executed by the processor 111, each process of the foregoing method embodiment is implemented, with the same technical effect achieved. To avoid repetition, details are not described herein again.

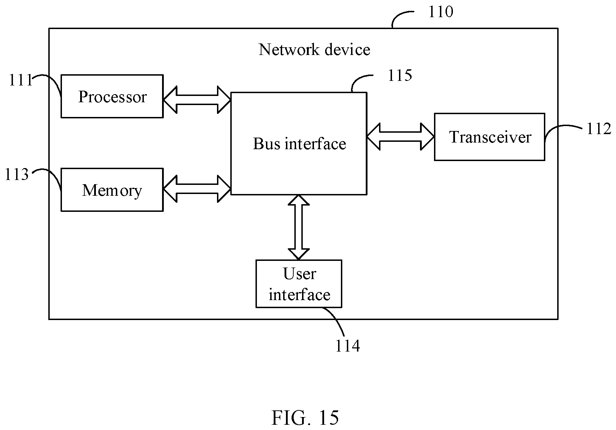

FIG. 15 is a schematic diagram of a hardware structure of a network device for implementing an embodiment of this application.

The network device 110 includes but is not limited to a processor 111, a transceiver 112, a memory 113, a user interface 114, and a bus interface 115.

The transceiver 112 is configured to receive target configuration information sent by a location management function device, where the target configuration information is used to configure at least one of the following for the network device or UE: a first target signal to be sent and related information for sending the first target signal, where the first target signal is used to determine a location of the UE.

According to the network device provided in this embodiment of this application, the network device can send the first target signal based on the first target signal or the related information for sending the first target signal that is configured by the location management function device, to implement positioning of the UE. In other words, the location management function device can configure the target configuration information for the network device based on an actual requirement. Therefore, a problem that the UE cannot determine the location of the UE in time can be avoided, and efficiency of determining the location of the UE by the UE is improved.

The processor 111 may be responsible for managing a bus architecture and usual processing, and the processor 111 may be configured to read and execute programs in the memory 113 to implement processing functions and control of the network device 110. The memory 113 may store data that is used when the processor 111 performs an operation. The processor 111 and the memory 113 may be integrated, or separately disposed.

In this embodiment of this application, the network device 110 may further include a program or instructions stored in the memory 113 and capable of running on the processor 111. When the program or instructions are executed by the processor 111, the steps of the method provided in the embodiment of this application are implemented.

In FIG. 15, a bus architecture may include any quantity of interconnect buses and bridges, specifically for connecting together circuits that are of one or more processors represented by the processor 111 and of a memory represented by the memory 113. The bus architecture may further interconnect various other circuits such as a peripheral device, a voltage regulator, and a power management circuit. These are all well known in the art, and therefore are not described again in this embodiment of this application. The bus interface 115 provides an interface. The transceiver 112 may be a plurality of components, including a transmitter and a receiver, and provides units for communicating with a variety of other apparatuses on a transmission medium. For different LTEs, the user interface 114 may also be an interface that can be externally or internally connected to a required device. The connected device includes but is not limited to a keypad, a display, a speaker, a microphone, a joystick, and the like.

An embodiment of this application further provides a readable storage medium. The readable storage medium stores a program or instructions. When the program or instructions are executed by the processor 111 shown in FIG. 15, each process of the foregoing method embodiment is implemented, with the same technical effect achieved. To avoid repetition, details are not described herein again. The computer-readable storage medium is, for example, a ROM, a RAM, a magnetic disk, or an optical disc.

Optionally, an embodiment of this application further provides UE, including a processor 121, a memory 122, and a program or instructions stored in the memory 122 and capable of running on the processor 121. When the program or instructions are executed by the processor 121, each process of the foregoing method embodiment is implemented, with the same technical effect achieved. To avoid repetition, details are not described herein again.

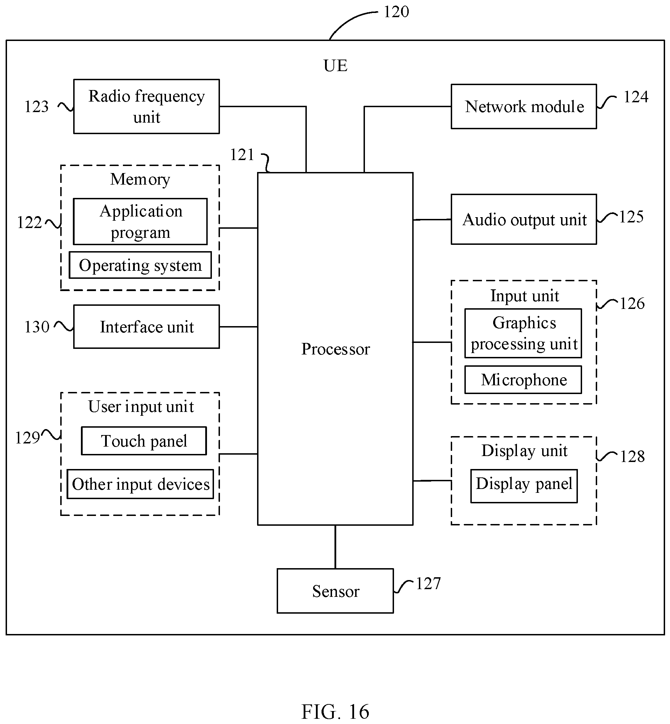

FIG. 16 is a schematic diagram of a hardware structure of LTE for implementing an embodiment of this application.

The LTE 120 includes but is not limited to components such as a radio frequency unit 123, a network module 124, an audio output unit 125, an input unit 126, a sensor 127, a display unit 128, a user input unit 129, an interface unit 130, a memory 122, and a processor 121.

A person skilled in the art may understand that the UE 120 may further include a power supply (such as a battery) for supplying power to the components. The power supply may be logically connected to the processor 121 through a power management system. In this way, functions such as charge management, discharge management, and power consumption management are implemented by using the power management system. The structure of the UE 120 shown in FIG. 16 does not constitute a limitation on the UE. The UE may include more or fewer components than those shown in the figure, or some components are combined, or component arrangements are different. Details are not described herein again.

The radio frequency unit 123 is configured to receive target configuration information sent by a first device, where the first device is a location management function device or a network device, and the target configuration information is used to configure at least one of the following for the UE: a first target signal to be sent by the UE and related information for sending the first target signal by the UE; or receive a first target signal sent by a network device. The first target signal is used to determine a location of the UE.

According to the LTE provided in this embodiment of this application, because the location management function device can configure the first target signal or the related information for sending the first target signal for the UE, the UE can send the first target signal based on the configured information to implement positioning of the UE. In other words, the location management function device can configure the target configuration information for the UE based on an actual requirement. Therefore, a problem that the UE cannot determine the location of the UE in time can be avoided, and efficiency of determining the location of the UE by the UE is improved.

An embodiment of this application further provides a readable storage medium. The readable storage medium stores a program or instructions. When the program or instructions are executed by a processor, each process of the foregoing method embodiment is implemented, with the same technical effect achieved. To avoid repetition, details are not described herein again.

The processor is the processor in the UE in the foregoing embodiment. The readable storage medium includes a computer-readable storage medium, such as a ROM, a RAM, a magnetic disk, or an optical disc.

An embodiment of this application further provides a chip. The chip includes a processor and a communications interface. The communications interface is coupled to the processor. The processor is configured to run a program or instructions to implement each process of the foregoing method embodiment, with the same technical effect achieved. To avoid repetition, details are not described herein again.

It should be understood that the chip provided in this embodiment of this application may also be referred to as a system-level chip, a system chip, a chip system, a system-on-chip, or the like.

It should be noted that in this specification, the term "comprise", "include", or any other variant thereof is intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary common hardware platform, and certainly may alternatively be implemented by using hardware. However, in most cases, the former is a preferred implementation. Based on such an understanding, the technical solutions of this application essentially or the part contributing to the prior art may be implemented in a form of a software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, a person of ordinary skill in the art may develop many other manners without departing from principles of this application and the protection scope of the claims, and all such manners fall within the protection scope of this application.

## Claims

1. A positioning method, wherein the method comprises:
sending, by a location management function device, target configuration information to a target device, wherein the target configuration information is used to configure at least one of the following for a network device or user equipment UE: a first target signal to be sent and related information for sending the first target signal, wherein
the first target signal is used to determine a location of the UE.

2. The method according to claim 1, wherein the target configuration information comprises at least one of the following: first indication information, first resource information, first period-related information, second indication information, and third indication information, wherein
the first indication information is used to indicate that the target device starts or stops sending the first target signal, the first resource information is used to indicate a frequency domain resource for sending a second target signal by the target device, the first period-related information is used to indicate a period for sending a third target signal by the target device, the second indication information is used to indicate corresponding transmission and reception point TRP-related information for sending a fourth target signal by the network device, and the third indication information is used to indicate resource usage of the first target signal; and all of the second target signal, the third target signal, and the fourth target signal comprise the first target signal.

3. The method according to claim 2, wherein the first resource information comprises at least one of the following: frequency layer information, carrier information, bandwidth part BWP information, a start resource position in a physical resource block PRB, and a bandwidth in the PRB.

4. The method according to claim 3, wherein the frequency layer information comprises at least one of the following: a first frequency layer identifier and a first frequency layer quantity.

5. The method according to claim 2, wherein the first period-related information comprises at least one of the following: a period value set, a muting parameter set, a repetition factor set, a first set, and a second set, wherein
the first set comprises at least one period value in the period value set and at least one muting parameter in the muting parameter set; and the second set comprises at least one period value in the period value set and at least one repetition factor in the repetition factor set, or the second set comprises at least one period value in the period value set, at least one muting parameter in the muting parameter set, and at least one repetition factor in the repetition factor set.

6. The method according to claim 2, wherein the TRP-related information comprises at least one of the following: a target identifier corresponding to a TRP and a TRP-related quantity, the target identifier comprises at least one of the following: a first TRP identifier, a first signal set identifier, and a first signal identifier, and the TRP-related quantity comprises at least one of the following: a first TRP quantity, a first signal set quantity, a first signal quantity, and a first target quantity, wherein
the first TRP identifier is an identifier of a TRP that sends signals in at least one TRP corresponding to the network device, the first signal set identifier is an identifier of a signal set to be sent in the TRP, and the first signal identifier is an identifier of a signal to be sent in the signal set; and the first TRP quantity is a quantity of TRPs that send signals in the at least one TRP, the first signal set quantity is a quantity of signal sets to be sent by each TRP in the at least one TRP, the first signal quantity is a quantity of signals in each signal set, and the first target quantity is a quantity of symbols occupied by each signal.

7. The method according to claim 2, wherein the third indication information comprises at least one of the following: a slot offset, a symbol offset, a frequency domain offset, and a comb size.

8. The method according to any one of claims 2 to 7, wherein there is an association relationship between the target configuration information and first target information, and the association relationship is used to determine the first target signal, wherein
the first target information is configuration information of a fifth target signal before the target configuration information is configured.

9. The method according to claim 8, wherein that there is an association relationship between the target configuration information and first target information comprises at least one of the following: there is an association relationship between the first resource information and second resource information in the first target information, and there is an association relationship between the first period-related information and second period-related information in the first target information.

10. The method according to claim 9, wherein the first target signal is any one of the following:
the second target signal;
a signal comprised in both the second target signal and the fifth target signal;
the third target signal;
a signal comprised in both the third target signal and the fifth target signal;
a signal comprised in both the second target signal and the third target signal; and
a signal comprised in all of the second target signal, the third target signal, and the fifth target signal.

11. The method according to claim 9, wherein that there is an association relationship between the first resource information and second resource information in the first target information comprises at least one of the following: there is an association relationship between the first frequency layer identifier in the first resource information and a second frequency layer identifier in the second resource information, and there is an association relationship between the first frequency layer quantity in the first resource information and a second frequency layer quantity in the second resource information.

12. The method according to claim 11, wherein the first target signal is any one of the following:
a signal to be sent at a frequency layer indicated by the first frequency layer identifier;
a signal to be sent at both the frequency layer indicated by the first frequency layer identifier and a frequency layer indicated by the second frequency layer identifier;
a signal to be sent at a frequency layer corresponding to the first frequency layer quantity;
a signal to be sent at both the frequency layer corresponding to the first frequency layer quantity and a frequency layer corresponding to the second frequency layer quantity;
a signal to be sent at both the frequency layer indicated by the first frequency layer identifier and the frequency layer corresponding to the first frequency layer quantity; and
a signal to be sent at all of the frequency layer indicated by the first frequency layer identifier, the frequency layer indicated by the second frequency layer identifier, the frequency layer corresponding to the first frequency layer quantity, and the frequency layer corresponding to the second frequency layer quantity.

13. The method according to claim 8, wherein that there is an association relationship between the target configuration information and first target information comprises at least one of the following: there is an association relationship between the first TRP identifier in the target configuration information and a second TRP identifier in the first target information, there is an association relationship between the first signal set identifier in the target configuration information and a second signal set identifier in the first target information, and there is an association relationship between the first signal identifier in the target configuration information and a second signal identifier in the first target information.

14. The method according to claim 13, wherein the first target signal is any one of the following:
a signal to be sent by the TRP indicated by the first TRP identifier;
a signal to be sent by both the TRP indicated by the first TRP identifier and a TRP indicated by the second TRP identifier;
the signal set indicated by the first signal set identifier;
a signal set comprised in both the signal set indicated by the first signal set identifier and a signal set indicated by the second signal set identifier;
the signal indicated by the first signal identifier; and
a signal comprised in both the signal indicated by the first signal identifier and a signal indicated by the second signal identifier.

15. The method according to claim 8, wherein that there is an association relationship between the target configuration information and first target information comprises at least one of the following: there is an association relationship between the first TRP quantity in the target configuration information and a second TRP quantity in the first target information, there is an association relationship between the first signal set quantity in the target configuration information and a second signal set quantity in the first target information, and there is an association relationship between the first signal quantity in the target configuration information and a second signal quantity in the first target information.

16. The method according to claim 15, wherein the first target signal is any one of the following:
a signal to be sent by a TRP corresponding to the first TRP quantity;
a signal to be sent by both the TRP corresponding to the first TRP quantity and a TRP corresponding to the second TRP quantity;
a signal set corresponding to the first signal set quantity;
a signal set comprised in both the signal set corresponding to the first signal set quantity and a signal set corresponding to the second signal set quantity;
a signal corresponding to the first signal quantity; and
a signal comprised in both the signal corresponding to the first signal quantity and a signal corresponding to the second signal quantity.

17. The method according to claim 1 or 2, wherein before the sending, by a location management function device, target configuration information to a target device, the method further comprises:
receiving, by the location management function device, a location service request sent by a location service client, wherein the location service request is used to request a location of at least one UE, and the at least one UE comprises the UE; and
the sending, by a location management function device, target configuration information to a target device comprises:
sending, by the location management function device, the target configuration information to the target device based on the location service request.

18. The method according to claim 17, wherein the at least one UE is UE whose target latency is less than or equal to a first preset threshold, and the target latency is either of the following: a latency from a first event to a second event and a latency from a third event to a fourth event, wherein
the first event is that the UE receives the location service request sent by the location management function device, the second event is that the location management function device receives a location response from the LTE with respect to the location service request, the third event is that the location management function device receives the location service request, and the fourth event is that the location management function device sends a location response from the location management function device with respect to the location service request.

19. The method according to claim 17, wherein in a case that a second target quantity is less than or equal to a second preset threshold or that the target number of times is less than or equal to a third preset threshold, the target configuration information comprises at least the first indication information, and the first indication information is used to indicate that the target device stops sending the first target signal; or
in a case that a second target quantity is greater than a second preset threshold or that the target number of times is greater than a third preset threshold, the target configuration information comprises at least the first indication information, and the first indication information is used to indicate that the target device starts sending the first target signal, wherein
the second target quantity is a quantity of UEs whose locations are requested by the location service client within first preset duration, and the target number of times is the number of times that the location service client sends the location service request within second preset duration.

20. The method according to claim 1, wherein the target configuration information comprises a target time, wherein
the target time is a time when the target device activates the target configuration information, and the target time comprises any one of the following: a universal time coordinated UTC, a frame number, and a slot number; or
the target time is an offset relative to a first time point, and the first time point is predefined or specified in a protocol.

21. The method according to claim 1, wherein the method further comprises:
receiving, by the location management function device, a target message sent by the network device, wherein the target message comprises capability information of the network device; or
sending, by the location management function device, a first request message to the network device, and receiving a first response message sent by the network device, wherein the first request message is used to request capability information of the network device, and the first response message comprises the capability information, wherein
the capability information is used to indicate whether the network device supports sending the first target signal based on the target configuration information.

22. The method according to claim 1 or 21, wherein after the sending, by a location management function device, target configuration information to a target device, the method further comprises:
receiving, by the location management function device, failure indication information sent by the target device, wherein the failure indication information is used to indicate that the target device cannot send the first target signal based on the target configuration information.

23. The method according to claim 22, wherein the failure indication information comprises failure cause information, and the failure cause information is used to indicate at least one of the following: a resource for sending the first target signal is insufficient, the target configuration information is not supported, and a service configuration of the first target signal is not supported.

24. The method according to claim 1, wherein after the sending, by a location management function device, target configuration information to a target device, the method further comprises:
sending, by the location management function device, second target information to the target device, wherein the second target information is used to indicate that the target device activates a part or all of configuration information in the target configuration information.

25. The method according to claim 24, wherein the target configuration information comprises N groups of configuration information; and
the second target information is used to indicate that the target device activates M groups of configuration information in the N groups of configuration information, or the second target information is used to indicate that the network device activates L groups of configuration information in the N groups of configuration information, wherein the L groups of configuration information are configuration information that the network device is allowed to send to the UE, N, M, and L are all positive integers, M is less than or equal to N, and L is less than or equal to N.

26. The method according to claim 25, wherein the second target information comprises an identifier of each group of configuration information in the M groups of configuration information; or
the second target information comprises an identifier of each group of configuration information in the L groups of configuration information.

27. The method according to claim 25 or 26, wherein before the sending, by a location management function device, target configuration information to a target device, the method further comprises:
sending, by the location management function device, a positioning information request to the target device, wherein the positioning information request is used to request the target device to send configuration information of the first target signal;
receiving, by the location management function device, a positioning information response sent by the target device; and
determining, by the location management function device based on a location service request sent by a location service client and the positioning information response, whether to send the target configuration information to the target device.

28. The method according to claim 27, wherein the positioning information request comprises identifiers of the M groups of configuration information or identifiers of the L groups of configuration information.

29. A positioning method, wherein the method comprises:
receiving, by a network device, target configuration information sent by a location management function device, wherein the target configuration information is used to configure at least one of the following for the network device or user equipment UE: a first target signal to be sent and related information for sending the first target signal, wherein
the first target signal is used to determine a location of the UE.

30. The method according to claim 29, wherein after the receiving, by a network device, target configuration information sent by a location management function device, the method further comprises:
sending, by the network device, the first target signal to the UE based on the target configuration information; or
sending, by the network device, the target configuration information to the UE, wherein the target configuration information is used by the UE to send the first target signal; or
sending, by the network device, failure indication information to the location management function device, wherein the failure indication information is used to indicate that the network device cannot send the first target signal based on the target configuration information.

31. The method according to claim 30, wherein the sending, by the network device, the target configuration information to the UE comprises:
broadcasting, by the network device, a system information block SIB message, wherein the SIB message comprises the target configuration information; or
sending, by the network device, a radio resource control RRC message to the UE, wherein the RRC message comprises the target configuration information.

32. The method according to claim 29 or 30, wherein the method further comprises:
sending, by the network device, a target message to the location management function device, wherein the target message comprises capability information of the network device; or
receiving, by the network device, a first request message sent by the location management function device, and sending a first response message to the location management function device, wherein the first request message is used to request capability information of the network device, and the first response message comprises the capability information, wherein
the capability information is used to indicate whether the network device supports sending the first target signal based on the target configuration information.

33. The method according to claim 30 or 31, wherein after the receiving, by a network device, target configuration information sent by a location management function device, the method further comprises:
receiving, by the network device, first target indication information sent by the location management function device, wherein the first target indication information is used to indicate that the network device activates a part or all of configuration information in the target configuration information.

34. The method according to claim 33, wherein the target configuration information comprises N groups of configuration information, and the first target indication information is used to indicate that the network device activates M groups of configuration information or L groups of configuration information in the N groups of configuration information, wherein the L groups of configuration information are configuration information that the network device is allowed to send to the UE, N, M, and L are all positive integers, M is less than or equal to N, and L is less than or equal to N.

35. The method according to claim 34, wherein after the receiving, by the network device, first target indication information sent by the location management function device, the method further comprises:
activating, by the network device, Q groups of configuration information or the L groups of configuration information, wherein the Q groups of configuration information are configuration information in the M groups of configuration information, and Q is a positive integer less than or equal to M; and
the sending, by the network device, the target configuration information to the UE comprises:
sending, by the network device, the Q groups of configuration information or the L groups of configuration information to the UE.

36. The method according to claim 35, wherein after the sending, by the network device, the Q groups of configuration information or the L groups of configuration information to the UE, the method further comprises:
sending, by the network device, second target indication information to the UE, wherein the second target indication information is used to indicate that the UE activates P groups of configuration information in the Q groups of configuration information or R groups of configuration information in the L groups of configuration information, P is a positive integer less than or equal to Q, and R is a positive integer less than or equal to L.

37. The method according to claim 36, wherein the second target indication information comprises an identifier of each group of configuration information in the P groups of configuration information; or
the second target indication information comprises an identifier of each group of configuration information in the R groups of configuration information.

38. The method according to claim 36, wherein a manner of indicating that the UE activates the P groups of configuration information or the R groups of configuration information by the second target indication information is any one of the following:
a manner of indicating activation by setting a target bit in a media access control control element MAC CE;
a manner of indicating activation by configuring a group identifier in the MAC CE;
a manner of indicating activation by configuring a group identifier in downlink control information DCI; and
a manner of indicating activation by setting a target bit in the DCI.

39. The method according to claim 29, wherein before the receiving, by a network device, target configuration information sent by a location management function device, the method further comprises:
receiving, by the network device, a positioning information request sent by the location management function device, wherein the positioning information request is used to request the network device to send configuration information of the first target signal; and
sending, by the network device, a positioning information response to the location management function device, wherein the positioning information response is used by the location management function device to determine whether to send the target configuration information to the network device.

40. A positioning method, wherein the method comprises:
receiving, by user equipment UE, target configuration information sent by a first device, wherein the first device is a location management function device or a network device, and the target configuration information is used to configure at least one of the following for the LTE: a first target signal to be sent by the LTE and related information for sending the first target signal by the LTE; or
receiving, by the UE, a first target signal sent by a network device, wherein
the first target signal is used to determine a location of the UE.

41. The method according to claim 40, wherein the receiving, by UE, target configuration information sent by a first device comprises:
receiving, by the UE, a system information block SIB message broadcast by the network device, wherein the SIB message comprises the target configuration information; or
receiving, by the LTE, a radio resource control RRC message sent by the network device, wherein the RRC message comprises the target configuration information.

42. The method according to claim 40 or 41, wherein after the receiving, by UE, target configuration information sent by a first device, the method further comprises:
receiving, by the UE, third target indication information sent by the first device, wherein the third target indication information is used to indicate that the UE activates a part or all of configuration information in the target configuration information.

43. The method according to claim 42, wherein the target configuration information comprises N groups of configuration information, and N is a positive integer; and
in a case that the first device is the location management function device, the third target indication information is used to indicate that the LTE activates M groups of configuration information in the N groups of configuration information; or in a case that the first device is the network device, the third target indication information is used to indicate that the LTE activates M groups of configuration information or L groups of configuration information in the N groups of configuration information, wherein the L groups of configuration information are configuration information that the network device is allowed to send to the UE, M and L are both positive integers, M is less than or equal to N, and L is less than or equal to N.

44. The method according to claim 43, wherein after the receiving, by UE, target configuration information sent by a first device, the method further comprises:
receiving, by the LTE, Q groups of configuration information or the L groups of configuration information sent by the network device, wherein the Q groups of configuration information are configuration information activated by the network device in the M groups of configuration information, and Q is a positive integer less than or equal to M.

45. The method according to claim 44, wherein after the receiving, by the UE, Q groups of configuration information or the L groups of configuration information sent by the network device, the method further comprises:
receiving, by the LTE, fourth target indication information sent by the network device, wherein the fourth target indication information is used to indicate that the UE activates P groups of configuration information in the Q groups of configuration information or R groups of configuration information in the L groups of configuration information, P is a positive integer less than or equal to Q, and R is a positive integer less than or equal to L.

46. The method according to claim 45, wherein the fourth target indication information comprises an identifier of each group of configuration information in the P groups of configuration information; or
the fourth target indication information comprises an identifier of each group of configuration information in the R groups of configuration information.

47. The method according to claim 45, wherein a manner of indicating that the UE activates the P groups of configuration information or the R groups of configuration information by the fourth target indication information is any one of the following:
a manner of indicating activation by setting a target bit in a media access layer control element MAC CE;
a manner of indicating activation by configuring a group identifier in the MAC CE;
a manner of indicating activation by configuring a group identifier in downlink control information DCI; and
a manner of indicating activation by setting a target bit in the DCI.

48. The method according to claim 40, wherein before the receiving, by UE, target configuration information sent by a first device, the method further comprises:
receiving, by the LTE, a positioning information request sent by the location management function device, wherein the positioning information request is used to request the UE to send configuration information of the first target signal; and
sending, by the LTE, a positioning information response to the location management function device, wherein the positioning information response is used by the location management function device to determine whether to send the target configuration information to the UE.

49. A positioning apparatus, wherein the positioning apparatus comprises a sending module, wherein
the sending module is configured to send target configuration information to a target device, wherein the target device is a network device or user equipment UE, the target configuration information is used to configure at least one of the following for the network device or the LTE: a first target signal to be sent and related information for sending the first target signal, wherein
the first target signal is used to determine a location of the UE.

50. The apparatus according to claim 49, wherein the target configuration information comprises at least one of the following: first indication information, first resource information, first period-related information, second indication information, and third indication information, wherein
the first indication information is used to indicate that the target device starts or stops sending the first target signal, the first resource information is used to indicate a frequency domain resource for sending a second target signal by the target device, the first period-related information is used to indicate a period for sending a third target signal by the target device, the second indication information is used to indicate corresponding transmission and reception point TRP-related information for sending a fourth target signal by the network device, and the third indication information is used to indicate resource usage of the first target signal; and all of the second target signal, the third target signal, and the fourth target signal comprise the first target signal.

51. The apparatus according to claim 50, wherein the first resource information comprises at least one of the following: frequency layer information, carrier information, bandwidth part BWP information, a start resource position in a physical resource block PRB, and a bandwidth in the PRB.

52. The apparatus according to claim 51, wherein the frequency layer information comprises at least one of the following: a first frequency layer identifier and a first frequency layer quantity.

53. The apparatus according to claim 50, wherein the first period-related information comprises at least one of the following: a period value set, a muting parameter set, a repetition factor set, a first set, and a second set, wherein
the first set comprises at least one period value in the period value set and at least one muting parameter in the muting parameter set; and the second set comprises at least one period value in the period value set and at least one repetition factor in the repetition factor set, or the second set comprises at least one period value in the period value set, at least one muting parameter in the muting parameter set, and at least one repetition factor in the repetition factor set.

54. The apparatus according to claim 50, wherein the TRP-related information comprises at least one of the following: a target identifier corresponding to a TRP and a TRP-related quantity, the target identifier comprises at least one of the following: a first TRP identifier, a first signal set identifier, and a first signal identifier, and the TRP-related quantity comprises at least one of the following: a first TRP quantity, a first signal set quantity, a first signal quantity, and a first target quantity, wherein
the first TRP identifier is an identifier of a TRP that sends signals in at least one TRP corresponding to the network device, the first signal set identifier is an identifier of a signal set to be sent in the TRP, and the first signal identifier is an identifier of a signal to be sent in the signal set; and the first TRP quantity is a quantity of TRPs that send signals in the at least one TRP, the first signal set quantity is a quantity of signal sets to be sent by each TRP in the at least one TRP, the first signal quantity is a quantity of signals in each signal set, and the first target quantity is a quantity of symbols occupied by each signal.

55. The apparatus according to claim 50, wherein the third indication information comprises at least one of the following: a slot offset, a symbol offset, a frequency domain offset, and a comb size.

56. The apparatus according to any one of claims 50 to 55, wherein there is an association relationship between the target configuration information and first target information, and the association relationship is used to determine the first target signal, wherein
the first target information is configuration information of a fifth target signal before the target configuration information is configured.

57. The apparatus according to claim 56, wherein that there is an association relationship between the target configuration information and first target information comprises at least one of the following: there is an association relationship between the first resource information and second resource information in the first target information, and there is an association relationship between the first period-related information and second period-related information in the first target information.

58. The apparatus according to claim 57, wherein the first target signal is any one of the following:
the second target signal;
a signal comprised in both the second target signal and the fifth target signal;
the third target signal;
a signal comprised in both the third target signal and the fifth target signal;
a signal comprised in both the second target signal and the third target signal; and
a signal comprised in all of the second target signal, the third target signal, and the fifth target signal.

59. The apparatus according to claim 57, wherein that there is an association relationship between the first resource information and second resource information in the first target information comprises at least one of the following: there is an association relationship between the first frequency layer identifier in the first resource information and a second frequency layer identifier in the second resource information, and there is an association relationship between the first frequency layer quantity in the first resource information and a second frequency layer quantity in the second resource information.

60. The apparatus according to claim 59, wherein the first target signal is any one of the following:
a signal to be sent at a frequency layer indicated by the first frequency layer identifier;
a signal to be sent at both the frequency layer indicated by the first frequency layer identifier and a frequency layer indicated by the second frequency layer identifier;
a signal to be sent at a frequency layer corresponding to the first frequency layer quantity;
a signal to be sent at both the frequency layer corresponding to the first frequency layer quantity and a frequency layer corresponding to the second frequency layer quantity;
a signal to be sent at both the frequency layer indicated by the first frequency layer identifier and the frequency layer corresponding to the first frequency layer quantity; and
a signal to be sent at all of the frequency layer indicated by the first frequency layer identifier, the frequency layer indicated by the second frequency layer identifier, the frequency layer corresponding to the first frequency layer quantity, and the frequency layer corresponding to the second frequency layer quantity.

61. The apparatus according to claim 56, wherein that there is an association relationship between the target configuration information and first target information comprises at least one of the following: there is an association relationship between the first TRP identifier in the target configuration information and a second TRP identifier in the first target information, there is an association relationship between the first signal set identifier in the target configuration information and a second signal set identifier in the first target information, and there is an association relationship between the first signal identifier in the target configuration information and a second signal identifier in the first target information.

62. The apparatus according to claim 61, wherein the first target signal is any one of the following:
a signal to be sent by the TRP indicated by the first TRP identifier;
a signal to be sent by both the TRP indicated by the first TRP identifier and a TRP indicated by the second TRP identifier;
the signal set indicated by the first signal set identifier;
a signal set comprised in both the signal set indicated by the first signal set identifier and a signal set indicated by the second signal set identifier;
the signal indicated by the first signal identifier; and
a signal comprised in both the signal indicated by the first signal identifier and a signal indicated by the second signal identifier.

63. The apparatus according to claim 56, wherein that there is an association relationship between the target configuration information and first target information comprises at least one of the following: there is an association relationship between the first TRP quantity in the target configuration information and a second TRP quantity in the first target information, there is an association relationship between the first signal set quantity in the target configuration information and a second signal set quantity in the first target information, and there is an association relationship between the first signal quantity in the target configuration information and a second signal quantity in the first target information.

64. The apparatus according to claim 63, wherein the first target signal is any one of the following:
a signal to be sent by a TRP corresponding to the first TRP quantity;
a signal to be sent by both the TRP corresponding to the first TRP quantity and a TRP corresponding to the second TRP quantity;
a signal set corresponding to the first signal set quantity;
a signal set comprised in both the signal set corresponding to the first signal set quantity and a signal set corresponding to the second signal set quantity;
a signal corresponding to the first signal quantity; and
a signal comprised in both the signal corresponding to the first signal quantity and a signal corresponding to the second signal quantity.

65. The apparatus according to claim 49 or 50, wherein the apparatus further comprises a receiving module, wherein
before the sending module sends the target configuration information to the target device, the receiving module is configured to receive a location service request sent by a location service client, wherein the location service request is used to request a location of at least one UE, and the at least one UE comprises the UE; and
the sending module is specifically configured to send the target configuration information to the target device based on the location service request received by the receiving module.

66. The apparatus according to claim 65, wherein the at least one UE is UE whose target latency is less than or equal to a first preset threshold, and the target latency is either of the following: a latency from a first event to a second event and a latency from a third event to a fourth event, wherein
the first event is that the LTE receives the location service request sent by a location management function device, the second event is that the location management function device receives a location response from the UE with respect to the location service request, the third event is that the location management function device receives the location service request, and the fourth event is that the location management function device sends a location response from the location management function device with respect to the location service request.

67. The apparatus according to claim 65, wherein in a case that a second target quantity is less than or equal to a second preset threshold or that the target number of times is less than or equal to a third preset threshold, the target configuration information comprises at least the first indication information, and the first indication information is used to indicate that the target device stops sending the first target signal; or
in a case that a second target quantity is greater than a second preset threshold or that the target number of times is greater than a third preset threshold, the target configuration information comprises at least the first indication information, and the first indication information is used to indicate that the target device starts sending the first target signal, wherein
the second target quantity is a quantity of UEs whose locations are requested by the location service client within first preset duration, and the target number of times is the number of times that the location service client sends the location service request within second preset duration.

68. The apparatus according to claim 49, wherein the target configuration information comprises a target time, wherein
the target time is a time when the target device activates the target configuration information, and the target time comprises any one of the following: a universal time coordinated UTC, a frame number, and a slot number; or
the target time is an offset relative to a first time point, and the first time point is predefined or specified in a protocol.

69. The apparatus according to claim 49, wherein the apparatus further comprises a receiving module, wherein
the receiving module is configured to receive a target message sent by the network device, wherein the target message comprises capability information of the network device; or
the sending module is further configured to send a first request message to the network device, wherein the first request message is used to request capability information of the network device; and the receiving module is configured to receive a first response message sent by the network device, wherein the first response message comprises the capability information, wherein
the capability information is used to indicate whether the network device supports sending the first target signal based on the target configuration information.

70. The apparatus according to claim 49 or 69, wherein the apparatus further comprises a receiving module, wherein
after the sending module sends the target configuration information to the target device, the receiving module is configured to receive failure indication information sent by the target device, wherein the failure indication information is used to indicate that the target device cannot send the first target signal based on the target configuration information.

71. The apparatus according to claim 70, wherein the failure indication information comprises failure cause information, and the failure cause information is used to indicate at least one of the following: a resource for sending the first target signal is insufficient, the target configuration information is not supported, and a service configuration of the first target signal is not supported.

72. The apparatus according to claim 49, wherein after sending the target configuration information to the target device, the sending module is further configured to send second target information to the target device, wherein the second target information is used to indicate that the target device activates a part or all of configuration information in the target configuration information.

73. The apparatus according to claim 72, wherein the target configuration information comprises N groups of configuration information; and
the second target information is used to indicate that the target device activates M groups of configuration information in the N groups of configuration information, or the second target information is used to indicate that the network device activates L groups of configuration information in the N groups of configuration information, wherein the L groups of configuration information are configuration information that the network device is allowed to send to the UE, N, M, and L are all positive integers, M is less than or equal to N, and L is less than or equal to N.

74. The apparatus according to claim 73, wherein the second target information comprises an identifier of each group of configuration information in the M groups of configuration information; or
the second target information comprises an identifier of each group of configuration information in the L groups of configuration information.

75. The apparatus according to claim 73 or 74, wherein the apparatus further comprises a receiving module and a determining module, wherein
before sending the target configuration information to the target device, the sending module is further configured to send a positioning information request to the target device, wherein the positioning information request is used to request the target device to send configuration information of the first target signal;
the receiving module is configured to receive a positioning information response sent by the target device; and
the determining module is configured to determine, based on a location service request sent by a location service client and the positioning information response, whether to send the target configuration information to the target device.

76. The apparatus according to claim 75, wherein the positioning information request comprises identifiers of the M groups of configuration information or identifiers of the L groups of configuration information.

77. A positioning apparatus, wherein the positioning apparatus comprises a receiving module, wherein
the receiving module is configured to receive target configuration information sent by a location management function device, wherein the target configuration information is used to configure at least one of the following for the positioning apparatus or user equipment LTE: a first target signal to be sent and related information for sending the first target signal, wherein
the first target signal is used to determine a location of the UE.

78. The apparatus according to claim 77, wherein the apparatus further comprises a sending module, wherein
after the receiving module receives the target configuration information sent by the location management function device, the sending module is configured to send the first target signal to the UE based on the target configuration information; or send the target configuration information to the LTE, wherein the target configuration information is used by the UE to send the first target signal; or send failure indication information to the location management function device, wherein the failure indication information is used to indicate that a network device cannot send the first target signal based on the target configuration information.

79. The apparatus according to claim 78, wherein the sending module is specifically configured to broadcast a system information block SIB message, wherein the SIB message comprises the target configuration information; or send a radio resource control RRC message to the UE, wherein the RRC message comprises the target configuration information.

80. The apparatus according to claim 77 or 78, wherein the apparatus further comprises a sending module, wherein
the sending module is configured to send a target message to the location management function device, wherein the target message comprises capability information of the network device; or
the receiving module is further configured to receive a first request message sent by the location management function device, wherein the first request message is used to request capability information of the network device; and the sending module is configured to send a first response message to the location management function device, wherein the first response message comprises the capability information, wherein
the capability information is used to indicate whether the network device supports sending the first target signal based on the target configuration information.

81. The apparatus according to claim 78 or 79, wherein after receiving the target configuration information sent by the location management function device, the receiving module is further configured to receive first target indication information sent by the location management function device, wherein the first target indication information is used to indicate that the network device activates a part or all of configuration information in the target configuration information.

82. The apparatus according to claim 81, wherein the target configuration information comprises N groups of configuration information, and the first target indication information is used to indicate that the network device activates M groups of configuration information or L groups of configuration information in the N groups of configuration information, wherein the L groups of configuration information are configuration information that the network device is allowed to send to the UE, N, M, and L are all positive integers, M is less than or equal to N, and L is less than or equal to N.

83. The apparatus according to claim 82, wherein the apparatus further comprises an activation module, wherein
after the receiving module receives the first target indication information sent by the location management function device, the activation module is configured to activate Q groups of configuration information or the L groups of configuration information, wherein the Q groups of configuration information are configuration information in the M groups of configuration information, and Q is a positive integer less than or equal to M; and
the sending module is specifically configured to send the Q groups of configuration information or the L groups of configuration information to the UE.

84. The apparatus according to claim 83, wherein after sending the Q groups of configuration information or the L groups of configuration information to the UE, the sending module is further configured to send second target indication information to the UE, wherein the second target indication information is used to indicate that the UE activates P groups of configuration information in the Q groups of configuration information or R groups of configuration information in the L groups of configuration information, P is a positive integer less than or equal to Q, and R is a positive integer less than or equal to L.

85. The apparatus according to claim 84, wherein the second target indication information comprises an identifier of each group of configuration information in the P groups of configuration information; or
the second target indication information comprises an identifier of each group of configuration information in the R groups of configuration information.

86. The apparatus according to claim 84, wherein a manner of indicating that the LTE activates the P groups of configuration information or the R groups of configuration information by the second target indication information is any one of the following:
a manner of indicating activation by setting a target bit in a media access layer control element MAC CE;
a manner of indicating activation by configuring a group identifier in the MAC CE;
a manner of indicating activation by configuring a group identifier in downlink control information DCI; and
a manner of indicating activation by setting a target bit in the DCI.

87. The apparatus according to claim 77, wherein the apparatus further comprises a sending module, wherein
before receiving the target configuration information sent by the location management function device, the receiving module is further configured to receive a positioning information request sent by the location management function device, wherein the positioning information request is used to request a network device to send configuration information of the first target signal; and
the sending module is configured to send a positioning information response to the location management function device, wherein the positioning information response is used by the location management function device to determine whether to send the target configuration information to the network device.

88. A positioning apparatus, wherein the positioning apparatus comprises a receiving module, wherein
the receiving module is configured to receive target configuration information sent by a first device, wherein the first device is a location management function device or a network device, and the target configuration information is used to configure at least one of the following for the positioning apparatus: a first target signal to be sent by the positioning apparatus and related information for sending the first target signal by the positioning apparatus; or receive a first target signal sent by a network device, wherein
the first target signal is used to determine a location of the positioning apparatus.

89. The apparatus according to claim 88, wherein the receiving module is specifically configured to receive a system information block SIB message broadcast by the network device, wherein the SIB message comprises the target configuration information; or receive a radio resource control RRC message sent by the network device, wherein the RRC message comprises the target configuration information.

90. The apparatus according to claim 88 or 89, wherein after receiving the target configuration information sent by the first device, the receiving module is further configured to receive third target indication information sent by the first device, wherein the third target indication information is used to indicate that user equipment UE activates a part or all of configuration information in the target configuration information.

91. The apparatus according to claim 90, wherein the target configuration information comprises N groups of configuration information, and N is a positive integer; and
in a case that the first device is the location management function device, the third target indication information is used to indicate that the LTE activates M groups of configuration information in the N groups of configuration information; or in a case that the first device is the network device, the third target indication information is used to indicate that the LTE activates M groups of configuration information or L groups of configuration information in the N groups of configuration information, wherein the L groups of configuration information are configuration information that the network device is allowed to send to the UE, M and L are both positive integers, M is less than or equal to N, and L is less than or equal to N.

92. The apparatus according to claim 91, wherein after receiving the target configuration information sent by the first device, the receiving module is further configured to receive Q groups of configuration information or the L groups of configuration information sent by the network device, wherein the Q groups of configuration information are configuration information activated by the network device in the M groups of configuration information, and Q is a positive integer less than or equal to M.

93. The apparatus according to claim 92, wherein after receiving the Q groups of configuration information or the L groups of configuration information sent by the network device, the receiving module is further configured to receive fourth target indication information sent by the network device, wherein the fourth target indication information is used to indicate that the LTE activates P groups of configuration information in the Q groups of configuration information or R groups of configuration information in the L groups of configuration information, P is a positive integer less than or equal to Q, and R is a positive integer less than or equal to L.

94. The apparatus according to claim 93, wherein the fourth target indication information comprises an identifier of each group of configuration information in the P groups of configuration information; or
the fourth target indication information comprises an identifier of each group of configuration information in the R groups of configuration information.

95. The apparatus according to claim 93, wherein a manner of indicating that the LTE activates the P groups of configuration information or the R groups of configuration information by the fourth target indication information is any one of the following:
a manner of indicating activation by setting a target bit in a media access layer control element MAC CE;
a manner of indicating activation by configuring a group identifier in the MAC CE;
a manner of indicating activation by configuring a group identifier in downlink control information DCI; and
a manner of indicating activation by setting a target bit in the DCI.

96. The apparatus according to claim 88, wherein the apparatus further comprises a sending module, wherein
before receiving the target configuration information sent by the first device, the receiving module is further configured to receive a positioning information request sent by the location management function device, wherein the positioning information request is used to request UE to send configuration information of the first target signal; and
the sending module is configured to send a positioning information response to the location management function device, wherein the positioning information response is used by the location management function device to determine whether to send the target configuration information to the UE.

97. A location management function device, comprising a processor, a memory, and a program or instructions stored in the memory and capable of running on the processor, wherein when the program or instructions are executed by the processor, the steps of the positioning method according to any one of claims 1 to 28 are implemented.

98. A network device, comprising a processor, a memory, and a program or instructions stored in the memory and capable of running on the processor, wherein when the program or instructions are executed by the processor, the steps of the positioning method according to any one of claims 29 to 39 are implemented.

99. User equipment LTE, comprising a processor, a memory, and a program or instructions stored in the memory and capable of running on the processor, wherein when the program or instructions are executed by the processor, the steps of the positioning method according to any one of claims 40 to 48 are implemented.

100. A readable storage medium, wherein the readable storage medium stores a program or instructions, and when the program or instructions are executed by a processor, the steps of the positioning method according to any one of claims 1 to 28 are implemented, or the steps of the positioning method according to any one of claims 29 to 39 are implemented, or the steps of the positioning method according to any one of claims 40 to 48 are implemented.

101. A computer program product, wherein the program product is executed by at least one processor to implement the positioning method according to any one of claims 1 to 28, or implement the positioning method according to any one of claims 29 to 39, or implement the positioning method according to any one of claims 40 to 48.

102. A location management function device, wherein the location management function device is configured to perform the positioning method according to any one of claims 1 to 28.

103. A network device, wherein the network device is configured to perform the positioning method according to any one of claims 29 to 39.

104. User equipment UE, wherein the LTE is configured to perform the positioning method according to any one of claims 40 to 48.

105. A chip, wherein the chip comprises a processor and a communications interface, the communications interface is coupled to the processor, and the processor is configured to run a program or instructions to implement the positioning method according to any one of claims 1 to 28, or implement the positioning method according to any one of claims 29 to 39, or implement the positioning method according to any one of claims 40 to 48.
